# EUROPEAN PATENT SPECIFICATION

(11) **EP 1 865 009 B1**
(45) Date of publication and mention of the grant of the patent: **23.05.2012**
(21) Application number: 06730743.9
(22) Date of filing: 31.03.2006
(51) Int. Cl.: C08F 290/04

(54) **MODIFIED THERMOPLASTIC RESIN**
MODIFIZIERTES THERMOPLASTISCHES HARZ
RESINE THERMOPLASTIQUE MODIFIEE

(30) Priority: 31.03.2005 JP 2005101082
(43) Date of publication of application: 12.12.2007
(73) Proprietor: Kaneka Corporation, Osaka-shi, Osaka 530-8288 (JP)
(72) Inventor: NAKAGAWA, Yoshiki, c/o KANEKA CORPORATION, Osaka 5660072 (JP); HARADA, Hajime, c/o KANEKA CORPORATION, Osaka 5660072 (JP)
(74) Representative: Vossius & Partner
(86) International application number: PCT/JP2006/306795
(87) International publication number: WO 2006/106899

(56) References cited:
- WO-A-2005/003230
- JP-A- 02 102 214
- JP-A- 11 140 250
- JP-A- 2005 023 206
- JP-A- 2005 105 065
- JP-A- 2005 206 815

## Description

The present invention relates to a modified thermoplastic resin having a variety of improved characteristics.

A large number of thermoplastic resins that exhibit flow performances by heating have been developed, and utilized in all industrial fields. Examples of the thermoplastic resin include polyethylene (PE), polypropylene (PP), polystyrene (PS), acrylonitrile/styrene resins (AS), acrylonitrile/butadiene/styrene resins (ABS), methacrylic resins (PMMA), vinyl chloride (PVC), polyamide (PA), polyacetal (POM), ultra high molecular polyethylene (UHPE), polybutylene terephthalate (PBT), GF-reinforced polyethylene terephthalate (GF-PET), polymethylpentene (TPX), polyphenylene sulfide (PPS), polyetherether ketone (PEEK), liquid crystal polymers (LCP), polytetrafluoroethylene (PTFE), polyetherimide (PEI), polyarylate (PAR), polysulfone (PSF), polyethersulfone (PES), polyamideimide (PAI), and the like. Furthermore, many commercial products of thermoplastic elastomers have been also manufactured in recent years.

Many of the thermoplastic resins are produced by addition polymerization such as anion polymerization, or radical polymerization. In order to improve the characteristics of the thermoplastic resins, modification with other monomer has been generally carried out. Among the foregoing examples, copolymers yielded as a consequence of the modification are included. Furthermore, other process for the modification involves a grafting technique. A thermoplastic resin which had been polymerized beforehand is activated with a radical initiator or the like, and then another monomer is added thereto, whereby a product in which blocks generated by polymerization of the monomer are bound to the thermoplastic resin in a branched manner is obtained. However, according to this method, the added monomer may remain, or a polymer yielded by polymerization of the monomer alone may be generated. Therefore, it is difficult to obtain a product having a precisely controlled structure.

To the contrary, a concept of macromonomers that are a polymer having a polymerizable group was proposed by Milkovich *et al.,* and the modification technique of the resin using the macromonomer was developed (for example, see Patent Documents 1 and 5). Similarly to the grafting by the monomer described above, the resin which had been polymerized beforehand is activated, and then the macromonomer is allowed to react therewith, whereby grafting is enabled, and also the residual monomer can be decreased. However, this method is also problematic in that polymerization product of the macromonomer alone, and unreacted macromonomer may remain.

A graft polymer which is not accompanied by the aforementioned problems can be obtained by allowing a macromonomer having a similarly polymerizable group to be copolymerized in the polymerization system of the principal resin (for example, see Patent Document 2, 3 and 6). A variety of macromonomers have been already synthesized, and graft polymers yielded by copolymerization of the same have been synthesized. However, it is not still easy to synthesize a macromonomer. In particular, control of polymerization of the macromonomer of a vinyl polymer which is generally polymerized by radical polymerization is difficult. Therefore, such products have been hardly synthesized. Among them, control of polymerization of acrylic polymers is not easy due to the side reaction, therefore, it is difficult to produce a macromonomer having a polymerizable group at the ends.

Under such circumstances, the present inventors have developed a method of producing a macromonomer of a vinyl polymer having a more favorably controlled structure, and a method of producing a graft polymer using the same (for example, see Patent Documents 7 to 13).

As described hereinabove, modification techniques of a thermoplastic resin utilizing a macromonomer have been developed, however, the macromonomer basically has only one polymerizable functional group in a molecule. No resin modification with a polymer having two or more polymerizable functional groups has been known. In particular, since production of a polymer including a polymerizable carbon-carbon double bond at both ends of a vinyl polymer was difficult, therefore, application of the resin modification using the same has not been known. The present inventors developed such a polymer including a polymerizable carbon-carbon double bond at both ends of a vinyl polymer, and have utilized for a variety of applications. However, it was basically for curable compositions, and no modification of a thermoplastic resin was effected. When such a polymer is added to a polymerization system, it is believed that a network structure is constructed, leading to gellation in its entirety, whereby the characteristics of the thermoplastic resin may be lost.
Patent Document 1: Japanese Unexamined Patent Application Publication No. Sho 49-30462;
Patent Document 2: Japanese Unexamined Patent Application Publication No. Sho 61-200111;
Patent Document 3: Japanese Unexamined Patent Application Publication No. Sho 60-238301;
Patent Document 4: USP No. 4304705
Patent Document 5: USP No. 3786116
Patent Document 6: Japanese Unexamined Patent Application Publication No. Sho 62-64814
Patent Document 7: WO 99/65963
Patent Document 8: Japanese Unexamined Patent Application Publication No. 2000-072816;
Patent Document 9: Japanese Unexamined Patent Application Publication No. Hei 12-136211;
Patent Document 10: Japanese Unexamined Patent Application Publication No. Hei 12-095826;
Patent Document 11: Japanese Unexamined Patent Application Publication No. 2001-055551;
Patent Document 12: Japanese Unexamined Patent Application Publication No. 2000-154205;
Patent Document 13: Japanese Unexamined Patent Application Publication No. 2000-186112;
Nonpatent Document 1: "Chemistry and Industry of Macromonomer" issued by IPC Publishers, published on 1989, edit: Masaya Yamashita
WO 2005/003230 A1 and its European equivalent EP 1 642 932 A1 disclose a curable composition comprising a poly(meth)acrylate having at least one crosslinkable functional group and a surface tack modifier having a specific melting point. A (meth)acrylic polymer having a carbon-carbon double bond containing group at its terminal is disclosed. In accordance with this document, a polymerizable monomer may be added when the polymer having a polymerizable carbon-carbon double bond is crosslinked.
JP 2005-023206 A discloses an adhesive composition containing (A) a vinylic polymer having two or more (meth)acryloyl-based groups in one molecule, (B) a vinylic polymer having on (meth)acryloyl-based group in one molecule and (C) an unsaturated carboxylic acid as essential components. In another aspect, the adhesive composition contains the compounds (A) and (B) as essential components, and the vinylic monomer constituting the main chain of the component (A) contains at least two selected from butyl acrylate, ethyl acrylate and 2-methoxyethyl acrylate. The adhesive of this prior art document is cured after its application to a substrate and an adherent.

For thermoplastic resins, there are a variety of problems such as enhancement of strength, imparting toughness, improvement of heat resistance, and the like. In order to solve these problems, copolymerization or grafting of monomers or oligomers has been carried out. As one method, graft polymerization with a macromonomer may be exemplified, but development of modification techniques for achieving better performances, and resins produced by the technique have still been desired.

In view of the foregoing, the present inventors elaborately investigated, and consequently succeeded in modifying the thermoplastic resin with a vinyl polymer that has one or more polymerizable carbon-carbon double bond-containing groups at two or more molecular ends each. Hence, the aforementioned problems were solved.
Accordingly, the present invention relates to a thermoplastic resin obtainable by addition polymerization of an addition polymerizable monomer, the thermoplastic resin being modified by copolymerization of said addition polymerizable monomer with a vinyl polymer (I) that has one or more polymerizable carbon-carbon double bond-containing groups at two or more molecular ends each, and has a value of ratio (Mw/Mn) of the weight average molecular weight (Mw) to the number average molecular weight (Mn) being less than 1.8.
Moreover, the weight percentage of the vinyl polymer (I) in the total weight of the addition polymerizable monomer and the vinyl polymer (I) is 1% or more and 20% or less.
As the vinyl polymer (I), one having its polymer main chain produced by radical polymerization can be used. In particular, one having its polymer main chain produced by living radical polymerization, or by polymerization of a vinyl monomer using a chain transfer agent is preferably used.
The living radical polymerization is preferably atom transfer radical polymerization.
In the atom transfer radical polymerization, a metal complex used as a catalyst is preferably a complex of copper.
In the vinyl polymer (I), the polymer main chain is preferably produced by polymerization of predominantly a monomer selected from the group consisting of (meth)acrylic monomers, acrylonitrile monomers, aromatic vinyl monomers, fluorine-containing vinyl monomers and silicon-containing vinyl monomers, more preferably produced by polymerization of predominantly a (meth)acrylic ester, and still more preferably produced by polymerization of predominantly an acrylic ester.
The vinyl polymer (I) has a number average molecular weight of preferably equal to or greater than 3000, more preferably equal to or greater than 5000, and still more preferably equal to or greater than 10000.
The vinyl polymer (I) has a value of ratio (Mw/Mn) of the weight average molecular weight (Mw) to the number average molecular weight (Mn) measured with gel permeation chromatography of more preferably equal to or less than 1.5, and still more preferably equal to or less than 1.3.
The polymerizable carbon-carbon double bond-containing group in the vinyl polymer (I) is preferably a group represented by the general formula 1:

-OC(O)C(R)=CH₂ (1)

wherein R represents hydrogen, or an organic group having 1 to 20 carbon atoms.
R in the above general formula 1 is preferably hydrogen, or a methyl group.
The polymerizable carbon-carbon double bond-containing group in the vinyl polymer (I) may be a carbon-carbon double bond conjugated with other carbon-carbon double bond, or a carbon-carbon double bond conjugated with an aromatic ring.
The vinyl polymer (I) is preferably produced by substituting a halogen group at the end of a vinyl polymer with a compound having a radical polymerizable carbon-carbon double bond.
It is preferred that the vinyl polymer (I) be produced by substituting the halogen group at the end of a vinyl polymer represented by the general formula 2:

-CR¹R²X (2)

wherein R¹ and R² represent a group bound to an ethylenic unsaturated group of a vinyl monomer; and X represents chlorine, bromine, or, iodine
with a compound represented by the general formula 3:

M⁺⁻OC(O)C(R)=CH₂ (3)

wherein R represents hydrogen, or an organic group having 1 to 20 carbon atoms; and M⁺ represents an alkali metal, or a quaternary ammonium ion.
The vinyl polymer (I) may be produced by allowing a vinyl polymer that has a hydroxyl group at the end to react with a compound represented by the general formula 4:

XC(O)C(R)=CH₂ (4)

wherein R represents hydrogen, or an organic group having 1 to 20 carbon atoms; and X represents chlorine, bromine, or a hydroxyl group.
The vinyl polymer (I) may also be produced by allowing a vinyl polymer that has a hydroxyl group at the end to react with a diisocyanate compound, and allowing the residual isocyanate group to react with a compound represented by the general formula 5:

HO-R'-OC(O)C(R)=CH₂ (5)

wherein R represents hydrogen, or an organic group having 1 to 20 carbon atoms; and R' represents a bivalent organic group having 2 to 20 carbon atoms.
As the vinyl polymer (I), a straight polymer or a branched polymer can be used.
The addition polymerizable monomer is preferably a radical polymerizable monomer or an anion polymerizable monomer.
The radical polymerizable monomer preferably comprises as a principal component a monomer selected from the group consisting of (meth)acrylic monomers, acrylonitrile monomers, aromatic vinyl monomers, vinyl ester monomers, halogenated vinyl monomers, fluorine-containing vinyl monomers and silicon-containing vinyl monomers.
It is preferred that the radical polymerizable monomer comprises styrene and/or acrylonitrile as a principal component; vinyl chloride as a principal component; or a (meth)acrylic ester as a principal component.
It is preferred that the anion polymerizable monomer comprises as a principal component at least one monomer selected from the group consisting of (meth)acrylic monomers, aromatic vinyl monomers, and diene monomers.
It is preferred that the anion polymerizable monomer comprises styrene as a principal component; a (meth)acrylic ester as a principal component; or butadiene and/or isoprene as a principal component
The addition polymerization is preferably radical polymerization or anion polymerization.
The radical polymerization may be aqueous polymerization, solution polymerization, or bulk polymerization.
The aqueous polymerization may be carried out as suspension polymerization or emulsion polymerization.
The radical polymerization may be living radical polymerization, or atom transfer radical polymerization.

In the step of producing a thermoplastic resin by addition polymerization of an addition polymerizable monomer, addition of the vinyl polymer (I) having one or more polymerizable carbon-carbon double bond-containing groups at two or more molecular ends each enables to readily obtain a thermoplastic resin having improved characteristics such as mechanical physical properties, heat resistance. These can be processed into foam, fiber, molded product, film or the like, and utilized. As compared with the case in which only one polymerizable group is included in a molecule like general macromonomers, probability of incorporation into the copolymerized polymer may be enhanced, and thus likelihood of occurrence of breed out as the polymerization proceeds may be decreased. Also, when the resin is modified with a macromonomer having a low glass transition point, internal plasticization can be caused which may lead to decrease in strength, however, when the vinyl polymer (I) of the present invention having one or more polymerizable carbon-carbon double bond-containing groups at two or more molecular ends each was used, decrease in the strength can be suppressed due to the partial cross-linked structure, even though the polymer has the same main chain.

An aspect of the present invention is a thermoplastic resin obtainable by addition polymerization of an addition polymerizable monomer, characterized in that the thermoplastic resin is modified by copolymerization of said addition polymerizable monomer with a vinyl polymer (I) having one or more polymerizable carbon-carbon double bond-containing groups at two or more molecular ends each, and having a value of ratio (Mw/Mn) of the weight average molecular weight (Mw) to the number average molecular weight (Mn) being less than 1.8, and the weight percentage of the vinyl polymer (I) in the total weight of the addition polymerizable monomer and the vinyl polymer (I) is 1% or more and 20% or less, in other words, a modified thermoplastic resin obtained through adding the vinyl polymer (I) having one or more polymerizable carbon-carbon double bond-containing groups at two or more molecular ends each in a step of production of the thermoplastic resin by addition polymerization of an addition polymerizable monomer.
Hereinafter, the best mode for carrying out the invention will be explained in detail.

### <<Illustration of Vinyl Polymer (I)>>

### <Polymerization of Main Chain of Vinyl Polymer (I)>

The main chain of the vinyl polymer (I) of the present invention is obtainable by radical polymerization. The radical polymerization processes can be classified into: "general radical polymerization process" in which a monomer having a specified functional group is merely copolymerized with a vinyl monomer using an azo-based compound, peroxide or the like as a polymerization initiator; and "controlled radical polymerization process" in which a specified functional group can be introduced to a controlled site such as the end.

Although the "general radical polymerization process" is a simple process, since the monomer having a specified functional group is introduced into the polymer just at random, it is problematic in that this monomer must be used in a large amount when a highly functionalized polymer is intended, while the proportion of the polymer to which the specified functional group is not introduced is increased when the monomer is used in a small amount. Also, due to the free radical polymerization, there is a problem of broad molecular weight distribution, and attainment of merely a polymer having a high viscosity.

The "controlled radical polymerization process" can be further classified into: "chain transfer agent process" in which a vinyl polymer including a functional group at the end is obtained by the polymerization using a chain transfer agent having the specified functional group; and "living radical polymerization process" in which a polymer having a molecular weight almost equal to the designed molecular weight is obtained by elongation of the polymerization at the growing end without causing a terminating reaction.

According to the "chain transfer agent process", a highly functionalized polymer can be obtained, but a fairly large amount of the chain transfer agent having a specified functional group is required per the initiator, leading to economical problem also involving the treatment. In addition, similarly to the "general radical polymerization process" described above, it is also accompanied by a problem of broad molecular weight distribution, and attainment of merely a polymer having a high viscosity due to the free radical polymerization.

In contrast to these polymerization processes, according to the "living radical polymerization process", it is the radical polymerization referred to as being hardly controllable polymerization due to high polymerization rate, and likelihood of occurrence of the terminating reaction by coupling or the like of the radicals; however, the termination reaction is not likely to occur, a polymer having a narrow molecular weight distribution (Mw/Mn being approximately 1.1 to 1.5) can be obtained, and the molecular weight can be freely controlled depending on the ratio of charging the monomer and the initiator.

Therefore, the "living radical polymerization process" is more preferred as the method of producing a vinyl polymer that has the aforementioned specified functional group since production of a polymer having a narrow molecular weight distribution and a low viscosity is enabled, and the monomer having a specified functional group can be introduced to an almost arbitrary site of the polymer thereby.

The living polymerization refers to, in its narrower sense, polymerization in which the molecular chain grows while keeping constant activity at the end, but in general, pseudo living polymerization is also included in which the molecular chain grows in an equilibrium state which involves inactivated end and activated end. The living polymerization referred to herein corresponds to such a general definition.

The "living radical polymerization process" has been actively investigated by various researchers recently. For example, one in which a cobalt porphyrin complex is used as disclosed in J. Am. Chem. Soc., 1994, Vol. 116, p. 7943; one in which a radical scavenger such as a nitroxide compound is used as disclosed in Macromolecules, 1994, Vol. 27, p. 7228; "Atom Transfer Radical Polymerization: ATRP" in which an organic halide or the like is used as an initiator, and a transition metal complex is used as a catalyst, and the like may be exemplified.

Of the "living radical polymerization process", the "atom transfer radical polymerization process" in which an organic halide, a halogenated sulfonyl compound or the like is used as an initiator, while a transition metal complex is used as a catalyst to allow a vinyl monomer to be polymerized is still more preferred as the method of producing a vinyl polymer that has a specified functional group because halogen or the like is incorporated which is comparatively advantageous in a functional group transformation reaction, and because of high degree of freedom in determining the initiator and the catalyst, in addition to the aforementioned advantages of the "living radical polymerization process". This atom transfer radical polymerization process is disclosed in, for example, Matyjaszewski et al., J. Am. Chem. Soc., 1995, Vol. 117, p. 5614, Macromolecules, 1995, Vol. 28, p. 7901, Science, 1996, Vol. 272, p. 866, WO 96/30421, WO 97/18247, WO 98/01480, WO 98/40415, Sawamoto et al., Macromolecules, 1995, Vol. 28, p. 1721, Japanese Unexamined Patent Application Publication Nos. Hei 9-208616, and Hei 8-41117.

In the present invention, selection of the process among these is not particularly restricted, but in principle, controlled radical polymerization is used. In light of ease in control , the living radical polymerization is preferred, and the atom transfer radical polymerization process is particularly preferred.

First, polymerization in which a chain transfer agent is used will be explained among the controlled radical polymerization. The radical polymerization in which a chain transfer agent (telomer) is used is not particularly limited but the following two processes may be illustrated as a method of obtaining a vinyl polymer having a terminal structure suited for the present invention.

Specifically, a process in which a polymer having halogen at the end is obtained using a halogenated hydrocarbon as a chain transfer agent as disclosed in Japanese Unexamined Patent Application Publication No. Hei 4-132706, and a process in which a polymer that has a hydroxyl group at the end is obtained using a hydroxyl group-containing mercaptan, hydroxyl group-containing polysulfide or the like as a chain transfer agent as disclosed in Japanese Unexamined Patent Application Publication No. Sho 61-271306, Japanese Patent No. 2594402, Japanese Unexamined Patent Application Publication No. Sho 54-47782 may be illustrated.

Next, living radical polymerization will be explained.
Among them, a process in which a radical scavenger such as a nitroxide compound is used will be first explained. In this polymerization, a stable nitroxy free radical (=N-O-) is generally used as a radical capping agent. Such a compound is not limited, but a nitroxy free radical from cyclic hydroxyamine such as 2,2,6,6-substituted-1-piperidinyloxy radical, 2,2,5,5-substituted-1-pyrrolidinyloxy radical is preferred. As the substituent, an alkyl group having not more than 4 carbon atoms such as a methyl group, an ethyl group is suitable. Specific nitroxy free radical compound is not limited, but examples thereof include 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, N,N-di-t-butylamineoxy radical. In place of the nitroxy free radical, a stable free radical such as galvinoxyl free radical may be used.

The radical capping agent is used in combination with a radical generator. It is considered that the reaction product of the radical capping agent and the radical generator serves as a polymerization initiator to allow the polymerization of the addition polymerizable monomer to proceed. Ratio of both agents used in combination is not particularly limited, but is suitably 0.1 to 10 mol of the radical initiator per mol of the radical capping agent.

As the radical generator, a variety of compounds can be used, and peroxide which can generate a radical under a polymerization temperature condition is preferred. The peroxide is not limited, and the examples include diacyl peroxides such as benzoyl peroxide and lauroyl peroxide, dialkyl peroxides such as dicumyl peroxide and di-t-butyl peroxide, peroxycarbonates such as diisopropylperoxy dicarbonate and bis(4-t-butylcyclohexyl)peroxydicarbonate, alkyl peresters such as t-butylperoxyoctate and t-butylperoxybenzoate. Particularly, benzoyl peroxide is preferred. Furthermore, a radical generator such as a radical-generating azo compound like azobisisobutyronitrile can be used in place of the peroxide.

As reported in Macromolecules, 1995, 28, 2993, the alkoxyamine compound as shown below may be used as an initiator, in stead of use of the radical capping agent and the radical generator in combination.

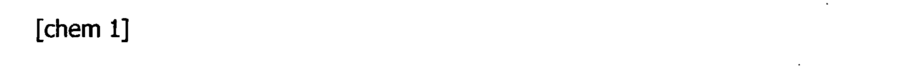

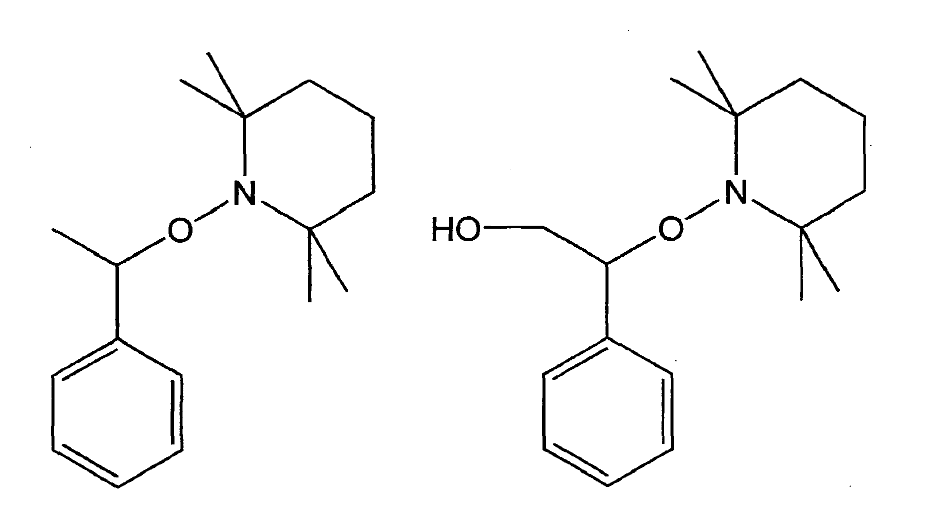

In the case in which the alkoxyamine compound is used as the initiator, when one having a functional group such as a hydroxyl group as illustrated above is used, the polymer that has the functional group at the end is obtained. When it is used in the method of the present invention, the polymer that has a functional group at the end can be obtained.

Conditions of polymerization such as the monomer, the solvent, the polymerization temperature employed in the polymerization in which the radical scavenger such as the aforementioned nitroxide compound is used are not limited, and may be similar to those employed in the atom transfer radical polymerization described below.

Next, the atom transfer radical polymerization process which is more preferred as the living radical polymerization of the present invention will be explained. Use of the atom transfer radical polymerization technique enables easy production of the vinyl polymer (I) having one or more polymerizable carbon-carbon double bond-containing groups at two or more molecular ends each, which is suitable for the present invention, while highly controlling the structure.

In this atom transfer radical polymerization, an organic halide, particularly an organic halide having a highly reactive carbon-halogen bond (for example, a carbonyl compound having a halogen at the a-position, or a compound having a halogen at a position of benzyl), a halogenated sulfonyl compound is used as the initiator.

Specifically, illustrative examples include

C₆H₅-CH₂X, C₆H₅-C(H)(X)CH₃, C₆H₅-C(X)(CH₃)₂

wherein C₆H₅ represents a phenyl group; and X represents chlorine, bromine, or iodine, R¹-C(H)(X)-CO₂R², R¹-C(CH₃)(X)-CO₂R², R¹-C(H)(X)-C(O)R², R¹-C(CH₃)(X)-C(O)R²,
wherein R¹ and R² represent a hydrogen atom or an alkyl group, aryl group, or aralkyl group having 1 to 20 carbon atoms; and X represents chlorine, bromine, or iodine,

R³-C₆H₄-SO₂X

wherein R³ represents a hydrogen atom or an alkyl group, aryl group, or aralkyl group having 1 to 20 carbon atoms; and X represents chlorine, bromine, or iodine).

As the initiator of the atom transfer radical polymerization, an organic halide or a halogenated sulfonyl compound having a functional group other than the functional group that initiates the polymerization can be also used. In such a case, a vinyl polymer that has the functional group at one end of the main chain, and having the structure represented by the above general formula 2 at another end of the main chain is produced. Examples of such a functional group include alkenyl groups, crosslinkable silyl groups, a hydroxyl group, epoxy groups, amino groups, amide groups. Process for introducing the polymerizable carbon-carbon double bond will be described later, but it can be also introduced by transforming such an end functional group.

The organic halide having an alkenyl group is not limited, but illustrative examples include e.g., those having the structure represented by the general formula 6:

R⁶R⁷C(X)-R⁸-R⁹-C(R⁵)=CH₂ (6)

wherein R⁵ represents hydrogen, or a methyl group; R⁶ and R⁷ represent hydrogen, a monovalent alkyl group, aryl group or aralkyl group having 1 to 20 carbon atoms, or a group interlinked at the other end; R⁸ represents -C(O)O- (ester group), -C(O)- (keto group), or an o-, m- or p-phenylene group; R⁹ represents a direct bond, or a bivalent organic group having 1 to 20 carbon atoms which may include one or more ether bond(s); and X represents chlorine, bromine, or iodine.
Specific examples of the substituents R⁶ and R⁷ include hydrogen, a methyl group, an ethyl group, a n-propyl group, an isopropyl group, a butyl group, a pentyl group, a hexyl group. R⁶ and R⁷ may link at the other end to form a cyclic skeleton.

Specific examples of the organic halide having an alkenyl group represented by the general formula 6 include

XCH₂C(O)O(CH₂),CH=CH₂,

H₃CC(H)(X)C(O)O(CH₂)ₙCH=CH₂,

(H₃C)₂C(X)C(O)O(CH₂)ₙCH=CH₂,

CH₃CH₂C(H)(X)C(O)O(CH₂)ₙCH=CH₂,

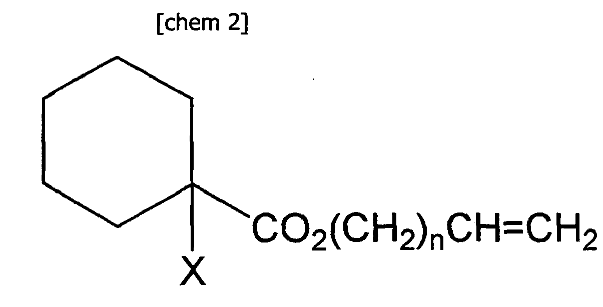

in each of the above formulae, X represents chlorine, bromine, or iodine; and n represents an integer of 0 to 20,

XCH₂C(O)O(CH₂)ₙO(CH₂)ₘCH=CH₂,

H₃CC(H)(X)C(O)O(CH₂)ₙO(CH₂)ₘCH=CH₂,

(H₃C)₂C(X)C(O)O(CH₂)ₙO(CH₂)ₘCH=CH₂,

CH₃CH₂C(H)(X)C(O)O(CH₂)ₙO(CH₂)ₘCH=CH₂,

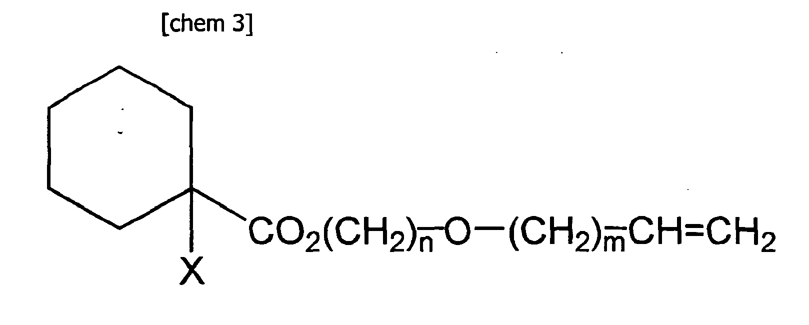

in each of the above formulae, X represents chlorine, bromine, or iodine; n represents an integer of 1 to 20; and m represents an integer of 0 to 20,

o, m, p-XCH₂-C₆H₄-(CH₂)ₙ-CH=CH₂,

o, m, p-CH₃C(H)(X)-C₆H₄-(CH₂)ₙ-CH=CH₂,

o, m, p-CH₃CH₂C(H)(X)-C₆H₄-(CH₂)ₙ-CH=CH₂,

in each of the above formulae, X represents chlorine, bromine, or iodine; and n represents an integer of 0 to 20,

o, m, p-XCH₂-C₆H₄-(CH₂)ₙ-O-(CH₂)ₘ-CH=CH₂,

o, m, p-CH₃C(H)(X)-C₆H₄-(CH₂)ₙ-O-(CH₂)ₘ-CH=CH₂,

o, m, p-CH₃CH₂C(H)(X)-C₆H₄-(CH₂)ₙ-O-(CH₂)ₘCH=CH₂,

in each of the above formulae, X represents chlorine, bromine, or iodine; n represents an integer of 1 to 20; and m represents an integer of 0 to 20,

o, m, p-XCH₂-C₆H₄-O-(CH₂)ₙ-CH=CH₂,

o, m, p-CH₃C(H)(X)-C₆H₄-O-(CH₂)ₙ-CH=CH₂,

o, m, p-CH₃CH₂C(H)(X)-C₆H₄-O-(CH₂)ₙ-CH=CH₂,

in each of the above formulae, X represents chlorine, bromine, or iodine; and n represents an integer of 0 to 20,

o, m, p-XCH₂-C₆H₄-O-(CH₂)ₙ-O-(CH₂)ₘ-CH=CH₂,

o, m, p-CH₃C(H)(X)-C₆H₄-O-(CH₂)ₙ-O-(CH₂)ₘ-CH=CH₂,

o, m, p-CH₃CH₂C(H)(X)-C₆H₄-O-(CH₂)ₙ-O-(CH₂)ₘ-CH=CH₂,

in each of the above formulae, X represents chlorine, bromine, or iodine; n represents an integer of 1 to 20; and m represents an integer of 0 to 20.
As the organic halide having an alkenyl group, the compound represented by the general formula 7 can be further exemplified:

H₂C=C(R⁵)-R⁹-C(R⁶)(X)-R¹⁰-R⁷ (7)

wherein R⁵, R⁶, R⁷, R⁹, and X are as defined above; R¹⁰ represents a direct bond, -C(O)O-(ester group), -C(O)- (keto group), or, an o-, m- or p-phenylene group; and wherein R⁸ represents a direct bond, or a bivalent organic group having 1 to 20 carbon atoms which may include one or more ether bond(s), but in the case of being the direct bond, a vinyl group is bound to the carbon atom to which halogen is bound, thereby forming a halogenated allylation product. In this case, the carbon-halogen bond is activated by the adjacent vinyl group, therefore, the C(O)O group, phenylene group is not necessarily required as R¹⁰, which may be the direct bond. When R⁹ is not the direct bond, R¹⁰ is preferably a C(O)O group, C(O) group, or a phenylene group for activating the carbon-halogen bond.

Specifically, illustrative examples of the compound represented by the general formula 7 include

CH₂=CHCH₂X, CH₂=C(CH₃)CH₂X,

CH₂=CHC(H)(X)CH₃, CH₂=C(CH₃)C(H)(X)CH₃,

CH₂=CHC(X)(CH₃)₂, CH₂=CHC(H)(X)C₂H₅,

CH₂=CHC(H)(X)CH(CH₃)₂,

CH₂=CHC(H)(X)C₆H₅, CH₂=CHCCH)(X)CH₂C₆H₅,

CH₂=CHCH₂C(H)(X)-CO₂R,

CH₂=CH(CH₂)₂C(H)(X)-CO₂R,

CH₂=CH(CH₂)₃C(H)(X)-CO₂R,

CH₂=CH(CH₂)₈C(H)(X)-CO₂R,

CH₂=CHCH₂C(H)(X)-C₆H₅,

CH₂=CH(CH₂)₂C(H)(X)-C₆H₅,

CH₂=CH(CH₂)₃C(H)(X)-C₆H₅,

in each of the above formulae, X represents chlorine, bromine, or iodine; R represents an alkyl group, aryl group or aralkyl group having 1 to 20 carbon atoms.

Specific examples of the halogenated sulfonyl compound having an alkenyl group include

o-, m-, p-CH₂=CH-(CH₂)ₙ-C₆H₄-SO₂X,

o-, m-, p-CH₂=CH-(CH₂)ₙ-O-C₆H₄-SO₂X,

in each of the above formulae, X represents chlorine, bromine, or iodine; and n represents an integer of 0 to 20.

The organic halide having the crosslinkable silyl group is not particularly limited, but illustrative examples include e.g., those having the structure represented by the general formula 8:

R⁶R⁷C(X)-R⁸-R⁹-C(H)(R⁵)CH₂-[Si(R¹¹)_{2-b}(Y)_{b}O]ₘ-Si(R¹²)₃₋ₐ(Y)ₐ (8)

wherein R⁵, R⁶, R⁷, R⁸, R⁹, X are as defined above; R¹¹ and R¹² each represent an alkyl group, aryl group or aralkyl group having 1 to 20 carbon atoms, or a triorganosiloxy group represented by (R')₃SiO- (R' represents a monovalent hydrocarbon group having 1 to 20 carbon atoms; the three R' may be the same or different); when two or more R¹¹ or R¹² are present, they may be the same or different; Y represents a hydroxyl group or a hydrolyzable group; when two or more Y are present, they may be the same or different; a represents 0, 1, 2, or 3; b represents 0, 1, or 2; m represents an integer of 0 to 19; however, a, m and b satisfy the formula of: a+mb ≥ 1.
Specifically, illustrative examples of the compound represented by the general formula 8 include

XCH₂C(O)O(CH₂)ₙSi(OCH₃)₃,

CH₃C(H)(X)C(O)O(CH₂)ₙSi(OCH₃)₃,

(CH₃)₂C(X)C(O)O(CH₂)ₙSi(OCH₃)₃,

XCH₂C(O)O(CH₂)ₙSi(CH₃)(OCH₃)₂,

CH₃C(H)(X)C(O)O(CH₂)ₙSi(CH₃)(OCH₃)₂,

(CH₃)₂C(X)C(O)O(CH₂)ₙSi(CH₃)(OCH₃)₂,

in each of the above formulae, X represents chlorine, bromine, iodine; and n represents an integer of 0 to 20,

XCH₂C(O)O(CH₂)ₙO(CH₂)ₘSi(OCH₃)₃,

H₃CC(H)(X)C(O)O(CH₂)ₙO(CH₂)ₘSi(OCH₃)₃,

(H₃C)₂C(X)C(O)O(CH₂)ₙO(CH₂)ₘSi(OCH₃)₃,

CH₃CH₂C(H)(X)C(O)O(CH₂)ₙO(CH₂)ₘSi(OCH₃)₃,

XCH₂C(O)O(CH₂)ₙO(CH₂)ₘSi(CH₃)(OCH₃)₂,

H₃CC(H)(X)C(O)O(CH₂)ₙO(CH₂)ₘ-Si(CH₃)(OCH₃)₂,

(H₃C)₂C(X)C(O)O(CH₂)ₙO(CH₂)ₘ-Si(CH₃)(OCH₃)₂,

CH₃CH₂C(H)(X)C(O)O(CH₂)ₙO(CH₂)ₘ-Si(CH₃)(OCH₃)₂,

in each of the above formulae, X represents chlorine, bromine, iodine; n represents an integer of 1 to 20; and m represents an integer of 0 to 20,

o, m, p-XCH₂-C₆H₄-(CH₂)₂Si(OCH₃)₃,

o, m, p-CH₃C(H)(X)-C₆H₄-(CH₂)₂Si(OCH₃)₃,

o, m, p-CH₃CH₂C(H)(X)-C₆H₄-(CH₂)₂Si(OCH₃)₃,

o, m, p-XCH₂-C₆H₄-(CH₂)₃Si(OCH₃)₃,

o, m, p-CH₃C(H)(X)-C₆H₄-(CH₂)₃Si(OCH₃)₃,

o, m, p-CH₃CH₂C(H)(X)-C₆H₄-(CH₂)₃Si(OCH₃)₃,

o, m, p-XCH₂-C₆H₄-(CH₂)₂-O-(CH₂)₃Si(OCH₃)₃,

o, m, p-CH₃C(H)(X)-C₆H₄-(CH₂)₂-O-(CH₂)₃Si(OCH₃)₃,

o, m, p-CH₃CH₂C(H)(X)-C₆H₄-(CH₂)₂-O-(CH₂)₃Si(OCH₃)₃,

o, m, p-XCH₂-C₆H₄-O-(CH₂)₃Si(OCH₃)₃,

o, m, p-CH₃C(H)(X)-C₆H₄-O-(CH₂)₃Si(OCH₃)₃,

o, m, p-CH₃CH₂C(H)(X)-C₆H₄-O-(CH₂)₃-Si(OCH₃)₃,

o, m, p-XCH₂-C₆H₄-O-(CH₂)₂-O-(CH₂)₃-Si(OCH₃)₃,

o, m, p-CH₃C(H)(X)-C₆H₄-O-(CH₂)₂-O-(CH₂)₃Si(OCH₃)₃,

o, m, p-CH₃CH₂C(H)(X)-C₆H₄-O-(CH₂)₂-O-(CH₂)₃Si(OCH₃)₃,

in each of the above formulae; and X represents chlorine, bromine, or iodine.

Illustrative examples of the organic halide having the crosslinkable silyl group further include those having the structure represented by the general formula 9:

(R¹²)₃₋ₐ(Y)ₐSi-[OSi(R¹¹)_{2-b}(Y)_{b}]ₘ-CH₂-C(H)(R⁵)-R⁹-C(R⁶)(X)-R¹⁰-R⁷ (9)

wherein R⁵, R⁶, R⁷, R⁹, R¹⁰, R¹¹, R¹², a, b, m, X, Y are as defined above.
Specifically, illustrative examples of such compounds include

(CH₃O)₃SiCH₂CH₂C(H)(X)C₆H₅,

(CH₃O)₂(CH₃)SiCH₂CH₂C(H)(X)C₆H₅,

(CH₃O)₃Si(CH₂)₂C(H)(X)-CO₂R,

(CH₃O)₂(CH₃)Si(CH₂)₂C(H)(X)-CO₂R,

(CH₃O)₃Si(CH₂)₃C(H)(X)-CO₂R,

(CH₃O)₂(CH₃)Si(CH₂)₃C(H)(X)-CO₂R,

(CH₃O)₃Si(CH₂)₄C(H)(X)-CO₂R,

(CH₃O)₂(CH₃)Si(CH₂)₄C(H)(X)-CO₂R,

(CH₃O)₃Si(CH₂)₉C(H)(X)-CO₂R,

(CH₃O)₂(CH₃)Si(CH₂)₉C(H)(X)-CO₂R,

(CH₃O)₃Si(CH₂)₃C(H)(X)-C₆H₅,

(CH₃O)₂(CH₃)Si(CH₂)₃C(H)(X)-C₆H₅,

(CH₃O)₃Si(CH₂)₄C(H)(X)-C₆H₅,

(CH₃O)₂(CH₃)Si(CH₂)₄C(H)(X)-C₆H₅,

in each of the above formulae, X represents chlorine, bromine, or iodine; and R represents an alkyl group, aryl group or aralkyl group having 1 to 20 carbon atoms.

The organic halide or halogenated sulfonyl compound having the hydroxyl group is not particularly limited, and the following compound may be illustrated:

HO-(CH₂)ₙ-OC(O)C(H)(R)(X)

in each of the above formulae, X represents chlorine, bromine, or iodine; R represents a hydrogen atom, or an alkyl group, aryl group or aralkyl group having 1 to 20 carbon atoms; and n represents an integer of 1 to 20.
The organic halide or halogenated sulfonyl compound having the amino group is not particularly limited, and the following compound may be illustrated:

H₂N-(CH₂)ₙ-OC(O)C(H)(R)(X)

in each of the above formulae, X represents chlorine, bromine, or iodine; R represents a hydrogen atom, or an alkyl group, aryl group or aralkyl group having 1 to 20 carbon atoms; and n represents an integer of 1 to 20.
The organic halide or halogenated sulfonyl compound having the epoxy group is not particularly limited, and the following compound may be illustrated:

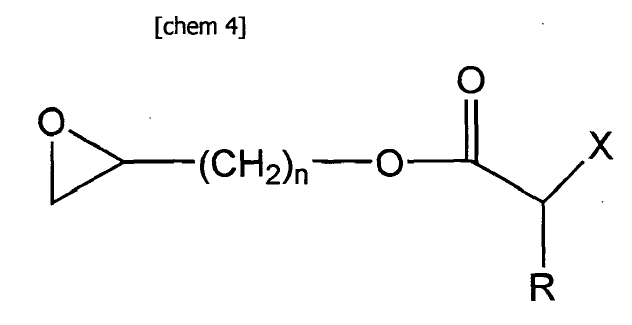

in each of the above formulae, X represents chlorine, bromine, or iodine; R represents a hydrogen atom, or an alkyl group, aryl group or aralkyl group having 1 to 20 carbon atoms; and n represents an integer of 1 to 20.
Since the vinyl polymer (I) used in the present invention has one or more polymerizable carbon-carbon double bond-containing groups at two or more molecular ends each, it is usually preferred to use the organic halide, or halogenated sulfonyl compound having two or more initiation points as the initiator. Specifically, illustrative examples include

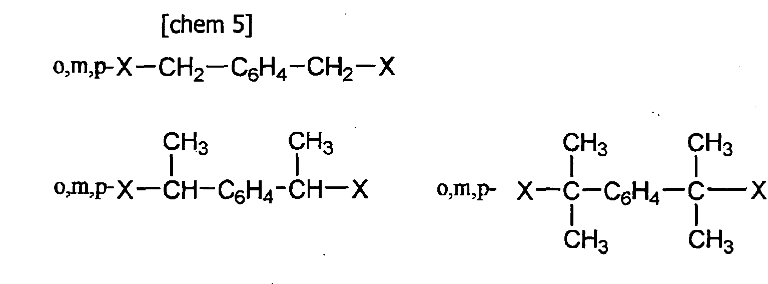

wherein C₆H₄ represents a phenylene group; and X represents chlorine, bromine, or iodine, 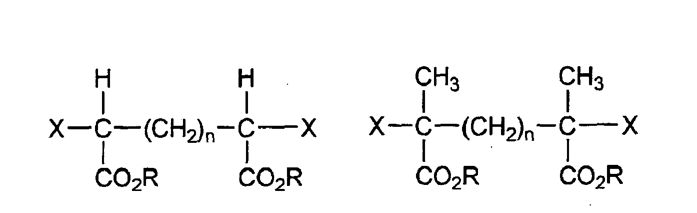 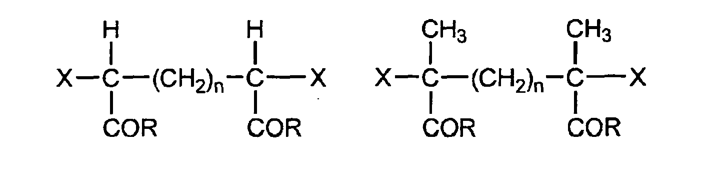 wherein R represents an alkyl group, aryl group or aralkyl group having 1 to 20 carbon atoms; n represents an integer of 0 to 20; and X represents chlorine, bromine, or iodine, 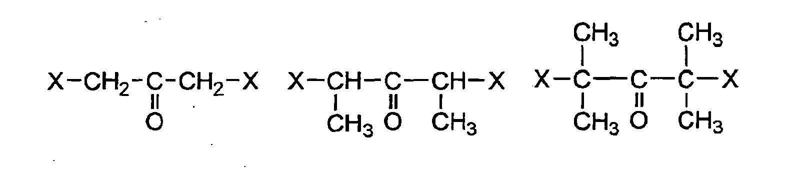 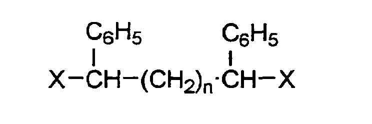 wherein X represents chlorine, bromine, or iodine; and n represents an integer of 0 to 20,

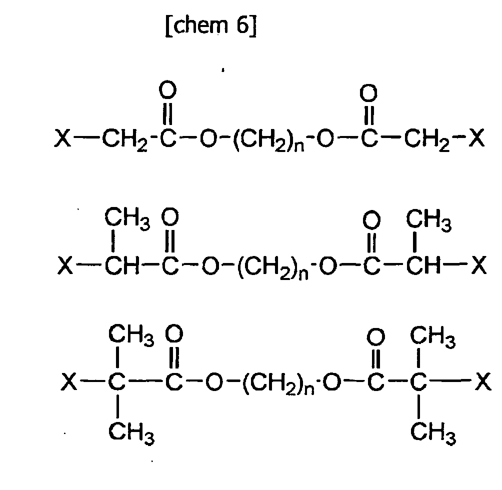

wherein n represents an integer of 1 to 20; and X represents chlorine, bromine, or iodine, 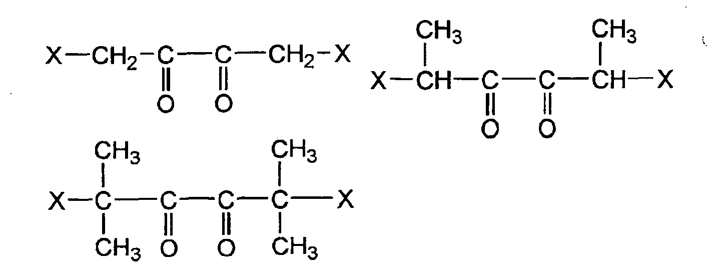 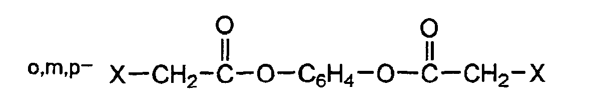 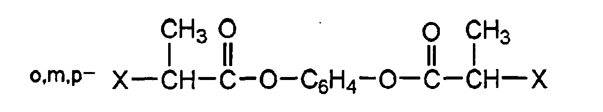 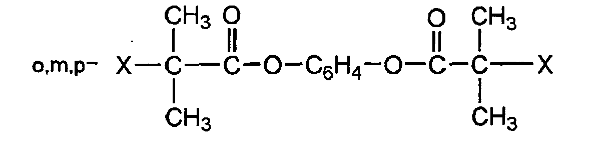 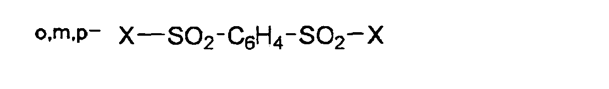 wherein X represents chlorine, bromine, or iodine.

The transition metal complex used as the polymerization catalyst is not particularly limited, but is preferably a metal complex having an element of group VII, group VIII, group IX, group X, or group XI in the periodic table as a central metal. More preferable examples include complexes of zerovalent copper, monovalent copper, bivalent ruthenium, bivalent iron or bivalent nickel. Among them, the complex of copper is preferred. Specifically, illustrative examples of the monovalent copper compound include cuprous chloride, cuprous bromide, cuprous iodide, cuprous cyanide, cuprous oxide, cuprous perchlorate. When the copper compound is used, in order to enhance the catalytic activity, a ligand such as 2,2'-bipyridyl and a derivative thereof, 1,10-phenanthroline and a derivative thereof, polyamine such as tetramethylethylenediamine, pentamethyldiethylenetriamine, hexamethyltris(2-aminoethyl)amine or the like may be added. Furthermore, a tristriphenylphosphine complex of bivalent ruthenium chloride (RuCl₂(PPh₃)₃) is also suitable as the catalyst. When the ruthenium compound is used as the catalyst, an aluminum alkoxide may be added as an activator. Moreover, a bistriphenylphosphine complex of bivalent iron (FeCl₂(PPh₃)₂), a bistriphenylphosphine complex of bivalent nickel (NiCl₂(PPh₃)₂), and a bistributylphosphine complex of bivalent nickel (NiBr₂(PBu₃)₂) are also suitable as the catalyst.

The polymerization can be carried out in a solvent free system, or in a variety of solvents. Examples of the type of the solvent include hydrocarbon-based solvents such as benzene and toluene, ether-based solvents such as diethyl ether and tetrahydrofuran, halogenated hydrocarbon-based solvents such as methylene chloride and chloroform, ketone-based solvents such as acetone, methylethyl ketone and methylisobutyl ketone, alcohol-based solvents such as methanol, ethanol, propanol, isopropanol, n-butyl alcohol and tert-butyl alcohol, nitrile-based solvents such as acetonitrile, propionitrile and benzonitrile, ester-based solvents such as ethyl acetate and butyl acetate, carbonate-based solvents such as ethylene carbonate and propylene carbonate, which can be used alone or as a mixture of two or more thereof. Further, the polymerization can be carried out in the range of from room temperature to 200°C, and preferably at 50 to 150°C.

### <Main Chain of Vinyl Polymer (I)>

The monomer that constitutes the main chain of the vinyl polymer (I) of the present invention is not particularly limited, but any type of a variety of monomers can be used. Illustrative examples include: (meth)acrylic acid monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate and 2-perfluorohexadecylethyl (meth)acrylate; styrene monomers such as styrene, vinyltoluene, α-methylstyrene, chlorostyrene, styrene sulfonic acid and salts thereof; fluorine-containing vinyl monomers such as perfluoroethylene, perfluoropropylene and vinylidene fluoride; silicon-containing vinyl monomers such as vinyltrimethoxysilane and vinyltriethoxysilane; maleic anhydride, maleic acid, monoalkyl esters and dialkyl esters of maleic acid; fumaric acid, monoalkyl esters and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group-containing vinyl monomers such as acrylonitrile and methacrylonitrile; amide group-containing vinyl monomers such as acrylamide and methacryl amide; vinyl esters such as vinyl acetate, vinyl propionate, vinyl pivalate, vinyl benzoate and vinyl cinnamate; alkenes such as ethylene and propylene; conjugated dienes such as butadiene and isoprene; vinyl chloride, vinylidene chloride, allyl chloride, allyl alcohol. These may be used alone, or a plurality of these monomers may be copolymerized. Among them, in light of the physical properties and the like of the product, those produced by polymerization of the monomer selected from the group consisting of (meth)acrylic monomers, acrylonitrile monomers, aromatic vinyl monomers, fluorine-containing vinyl monomers and silicon-containing vinyl monomers as a principal component are preferred. More preferable monomers are acrylic ester monomers and methacrylic ester monomers. In the present invention, it is preferred that the product is used which was obtained by polymerization of such a preferable monomer as a "principal" component, and these preferable monomers may be copolymerized with other monomer. In such a case, the preferable monomer is included at a weight percentage of preferably 40%, and more preferably 60% or more. In the above form of denotation, for example, (meth)acrylic acid represents acrylic acid and/or methacrylic acid.

The number average molecular weight of the vinyl polymer (I) of the present invention is not limited, but is preferably equal to or greater than 2000, more preferably equal to or greater than 5000, and still more preferably equal to or greater than 10000. The upper limit is preferably equal to or less than 100000. When the molecular weight is too small, the effect similar to that when polyfunctional monomer having a low molecular weight is copolymerized can be merely achieved, whereby the characteristics of the vinyl polymer (I) are hardly exhibited. In addition, in the case of having the low molecular weight, the number of the functional groups may be relatively large when the modification is carried out using the same amount of the polymer (I). Consequently, gelatinization may be caused, and thus characteristics as a thermoplastic resin may be impaired. When the molecular weight is too high, the end functional group may be so few that bleed out from the counter polymer to be copolymerized may be caused before the modification.

The vinyl polymer (I) of the present invention has a ratio of the molecular weight distribution, i.e., the weight average molecular weight to the number average molecular weight measured with gel permeation chromatography being less than 1.8, preferably 1.7 or less, more preferably 1.6 or less, still more preferably 1.5 or less, particularly preferably 1.4 or less, and most preferably 1.3 or less. For the measurement on GPC in the present invention, a polystyrene gel column or the like is used with chloroform, tetrahydrofuran, in general, as a mobile phase, and the molecular weight value is determined in terms of the polystyrene equivalent. As the molecular weight distribution is narrower, the viscosity of the vinyl polymer (I) is lowered, and the structure of the thermoplastic resin produced by the method of the present invention is more favorably controlled, leading to advantages in achieving the intended physical properties.

### <Type of Polymerizable Carbon-Carbon Double Bond-Containing Group of Vinyl Polymer (I)>

Although the polymerizable carbon-carbon double bond-containing group of the vinyl polymer (I) is not limited, it is preferably a group represented by the general formula 1:

-OC(O)C(R)=CH₂ (1)

wherein R represents hydrogen, or an organic group having 1 to 20 carbon atoms, and more preferably, R represents hydrogen, or a methyl group, i.e., the group is preferably a (meth)acryloyl group.

In addition, preferable polymerizable carbon-carbon double bond-containing group of the vinyl polymer (I) includes the carbon-carbon double bond conjugated with other carbon-carbon double bond. Specific examples thereof include sorbic acid ester groups represented by the formula 10.

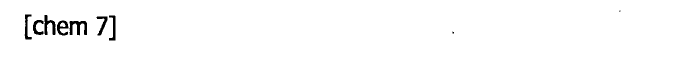

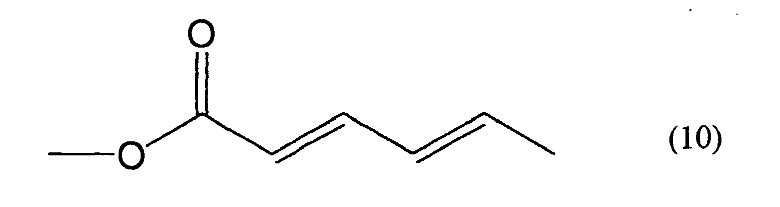

Further, as the polymerizable carbon-carbon double bond-containing group of the vinyl polymer (I), the carbon-carbon double bond conjugated with an aromatic ring may be also exemplified. Specific examples include the cinnamic acid ester groups represented by the formula 11.

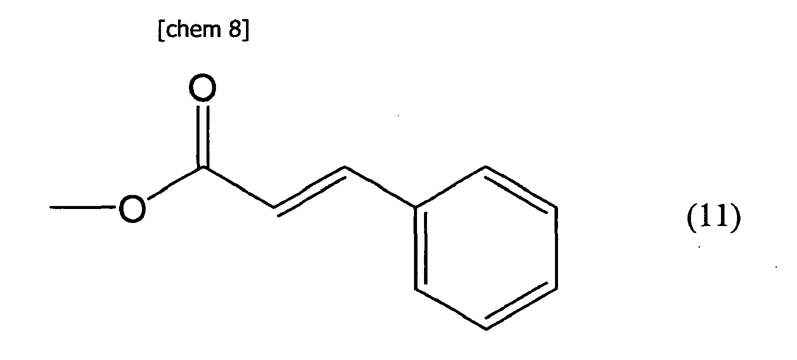

In addition, groups of exomethylene type represented by the formula 12 may be also illustrated.

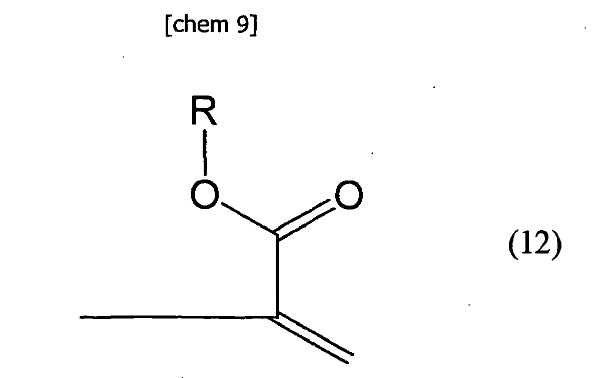

Among these, most preferred is the (meth)acryloyl group.

### <Process for Introducing Polymerizable Carbon-Carbon Double Bond-Containing Group of Vinyl Polymer (I)>

Hereinafter, the process for introducing the polymerizable carbon-carbon double bond-containing group of the vinyl polymer (I) of the present invention will be explained.
The process for introducing the polymerizable carbon-carbon double bond-containing group of the vinyl polymer (I) is not limited, but the following processes may be exemplified.

In particular, the process (A) is preferred.
(A) A process for production in which a halogen group at the end of a vinyl polymer is substituted with a compound having a radical polymerizable carbon-carbon double bond. Specifically, the process in which the vinyl polymer having the end structure represented by the general formula 2 is allowed to react with the compound represented by the general formula 3:

-CR¹R²X (2)

wherein R¹ and R² represent a group bound to an ethylenic unsaturated group of a vinyl monomer; and X represents chlorine, bromine, or iodine,

M⁺⁻OC(O)C(R)=CH₂ (3)

wherein R represents hydrogen, or an organic group having 1 to 20 carbon atoms; and M⁺ represents an alkali metal, or a quaternary ammonium ion.
(B) A process in which a vinyl polymer that has a hydroxyl group at the end is allowed to react with the compound represented by the general formula 4:

XC(O)C(R)=CH₂ (4)

wherein R represents hydrogen, or an organic group having 1 to 20 carbon atoms; and X represents chlorine, bromine, or hydroxyl group.
(C) A process in which a diisocyanate compound is allowed to react with a vinyl polymer that has a hydroxyl group at the end, followed by a reaction of the residual isocyanate group with the compound represented by the general formula 5:

HO-R'- OC(O)C(R)=CH₂ (5)

wherein R represents hydrogen, or an organic group having 1 to 20 carbon atoms; and R' represents a bivalent organic group having 2 to 20 carbon atoms.
Each process will be explained in detail below.
"Process (A) for Introducing Functional Group"
The aforementioned process (A) will be explained.
(A) The process in which the vinyl polymer having the end structure represented by the general formula 2 is allowed to react with the compound represented the general formula 3:

-CR¹R²X (2)

wherein R¹ and R² represent a group bound to the ethylenic unsaturated group of the vinyl monomer; and X represents chlorine, bromine, or iodine,

M⁺⁻OC(O)C(R)=CH₂ (3)

wherein R represents hydrogen, or an organic group having 1 to 20 carbon atoms; M⁺ represents an alkali metal or a quaternary ammonium ion.
The vinyl polymer having the end structure represented by the general formula 2 is produced by: the process in which the vinyl monomer is polymerized using the aforementioned organic halide or halogenated sulfonyl compound as the initiator, and using the transition metal complex as the catalyst; or the process in which the vinyl monomer is polymerized using the halogen compound as the chain transfer agent. Preferably, the former process is employed.

The compound represented by the general formula 3 is not particularly limited, and specific examples of R include e.g., -H, -CH₃, -CH₂CH₃, -(CH₂)ₙCH₃ (n represents an integer of 2 to 19), -C₆H₅, -CH₂OH, -CN, and the like, and R is preferably-H, or -CH₃. M⁺ represents a counter cation of the oxy anion, and M⁺ may be an alkali metal ion, specifically, a lithium ion, a sodium ion, a potassium ion, and a quaternary ammonium ion. Examples of the quaternary ammonium ion include tetramethylammonium ion, tetraethylammonium ion, tetrabenzylammonium ion, trimethyldodecylammonium ion, tetrabutylammonium ion and dimethylpiperidinium ion, and the quaternary ammonium ion is preferably a sodium ion, or a potassium ion. The amount of the used oxy anion represented by the general formula 3 is preferably 1 to 5 equivalent, and more preferably 1.0 to 1.2 equivalent per the halogen ends of the general formula 2. The solvent for carrying out this reaction is not particularly limited, but since a nucleophilic reaction is carried out, a polar solvent is preferred, and for example, tetrahydrofuran, dioxane, diethyl ether, acetone, dimethyl sulfoxide, dimethylformamide, dimethylacetamide, hexamethylphosphoric triamide, acetonitrile may be used. Although the temperature of the reaction is not limited, but in general, is 0 to 150°C. For retaining the polymerizable end group, the reaction is preferably carried out at room temperature to 100°C.
"Introduction (B) of End Functional Group"
Next, the process (B) will be explained.
(B) The process in which the vinyl polymer that has a hydroxyl group at the end is allowed to react with the compound represented by the general formula 4.

XC(O)C(R)=CH₂ (4)

wherein R represents hydrogen, or an organic group having 1 to 20 carbon atoms; and X represents chlorine, bromine, or hydroxyl.
The compound represented by the general formula 4 is not particularly limited, and specific examples of R include e.g., -H, -CH₃, -CH₂CH_{3;} -(CH₂)ₙCH₃ (wherein n represents an integer of 2 to 19), -C₆H₅, -CH₂OH, -CN. Preferably, R is -H, or -CH₃.

The vinyl polymer that has a hydroxyl group at the end is produced by the process in which the vinyl monomer is polymerized using the organic halide, or halogenated sulfonyl compound as the initiator, and using the transition metal complex as the catalyst (atom transfer radical polymerization process), or the process in which the vinyl monomer is polymerized using the compound having a hydroxyl group as the chain transfer agent. Preferably, the former process is employed. The method of producing the vinyl polymer that has a hydroxyl group at the end by these processes is not limited, but the following methods may be illustrated.

(a) A method in which a compound having a polymerizable alkenyl group and a hydroxyl group in combination in a molecule represented by the following general formula 13 or the like is allowed to react as a second monomer in synthesizing the vinyl polymer by living radical polymerization:

H₂C=C(R¹³)-R¹⁴-R¹⁵-OH (13)

wherein R¹³ represents hydrogen or an organic group having 1 to 20 carbon atoms, and preferably hydrogen or a methyl group, which may be the same or different; R¹⁴ represents -C(O)O- (ester group), or an o-, m- or p-phenylene group; R¹⁵ represents a direct bond, a bivalent organic group having 1 to 20 carbon atoms which may have one or more ether bond(s); when R¹⁴ is an ester group, a (meth)acrylate compound is represented; and when R¹⁴ is a phenylene group, a styrene compound is represented.
Timing of allowing the compound having the polymerizable alkenyl group and the hydroxyl group in combination in a molecule to react is not limited, but when a rubber-like property is expected, in particular, the compound is preferably allowed to react as the second monomer at the end of the polymerization reaction, or after completing the reaction of the given monomer.

(b) A method in which the compound having a poorly polymerizable alkenyl group and a hydroxyl group in a molecule is allowed to react as the second monomer at the end of the polymerization reaction, or after completing the reaction of the given monomer in synthesizing the vinyl polymer by living radical polymerization.

Such a compound is not particularly limited, and the compound represented by the general formula 14, and the like may be exemplified:

H₂C=C(R¹³)-R¹⁶-OH (14)

wherein R¹³ is as defined above. R¹⁶ represents a bivalent organic group having 1 to 20 carbon atoms which may have one or more ether bonds.
The compound represented by the general formula 14 is not particularly limited, but alkenyl alcohol such as 10-undecenol, 5-hexenol, or allyl alcohol is preferred because it is readily available.
(c) A method as disclosed in Japanese Unexamined Patent Application Publication No. Hei 4-132706, in which halogen of the vinyl polymer including at least one carbon-halogen bond represented by the general formula 2 obtained by atom transfer radical polymerization is allowed to hydrolyze, or to react with the hydroxyl group-containing compound, thereby introducing a hydroxyl group at the end.
(d) A method in which the vinyl polymer including at least one carbon-halogen bond represented by the general formula 2 obtained by atom transfer radical polymerization is allowed to react with a stabilized carbanion having a hydroxyl group as shown in the general formula 15, thereby substituting the halogen:

M⁺C⁻(R¹⁷)(R¹⁸)-R¹⁶-OH (15)

wherein R¹⁶ is as defined above; R¹⁷ and R¹⁸ each represent an electron-withdrawing group that stabilizes a carbanion C⁻, or one of these represents the electron-withdrawing group while another represents hydrogen or an alkyl group or phenyl group having 1 to 10 carbon atoms; the electron-withdrawing group represented by R¹⁷ and R¹⁸ may be -CO₂R (ester group), -C(O)R (keto group), -CON(R₂)(amide group), -COSR (thioester group), -CN (nitrile group), -NO₂ (nitro group), or the like; the substituent R represents an alkyl group having 1 to 20 carbon atoms, an aryl group having 6 to 20 carbon atoms or an aralkyl group having 7 to 20 carbon atoms, preferably an alkyl group or phenyl group having 1 to 10 carbon atoms; R¹⁷ and R¹⁸ is particularly preferably -CO₂R, -C(O)R or -CN.
(e) A method in which, for example, an elemental metal such as zinc or an organic metal compound is allowed to act on the vinyl polymer including at least one carbon-halogen bond represented by the general formula 2 obtained by atom transfer radical polymerization to prepare an enolate anion, and thereafter aldehyde or ketone is allowed to react therewith.

(f) A method in which halogen at the polymer end, preferably the vinyl polymer having at least one halogen represented by the general formula 2 is allowed to react with the hydroxyl group-containing oxy anion represented by the following general formula 16, or the hydroxyl group-containing carboxylate anion represented by the following general formula 17, to substitute the halogen with the hydroxyl group-containing substituent:

HO-R¹⁶-O-M⁺ (16)

wherein R¹⁶ and M⁺ is as defined above,

HO-R¹⁶-C(O)O⁻M⁺ (17)

wherein R¹⁶ and M⁺ is as defined above.
In the present invention, when halogen is not directly participated in the process of introducing the hydroxyl group as in (a) to (b), the method (b) is more preferred in light of further ease in control.
In addition, in the case of introducing the hydroxyl group by transformation of the halogen of the vinyl polymer including at least one carbon-halogen bond as in (c) to (f), the method (f) is more preferred in light of further ease in control.

"Introduction (C) of End Functional Group"
Next, the process (C) will be explained.
(C) A process in which a diisocyanate compound is allowed to react with a vinyl polymer that has a hydroxyl group at the end, followed by a reaction of the residual isocyanate group with the compound represented by the general formula 5:

   HO-R'-OC(O)C(R)=CH₂ (5)
wherein R represents hydrogen, or an organic group having 1 to 20 carbon atoms; and R' represents a bivalent organic group having 2 to 20 carbon atoms.
The compound represented by the general formula 5 is not particularly limited, and specific examples of R include e.g., -H, -CH₃, -CH₂CH₃, -(CH₂)ₙCH₃ (wherein n represents an integer of 2 to 19), -C₆H₅, -CH₂OH, -CN, and the like, and R is preferably -H, or -CH₃. As the specific compound, 2-hydroxypropyl methacrylate may be exemplified.

It is preferred that the vinyl polymer that has a hydroxyl group at the end be used by producing the method as described in the foregoing.

The diisocyanate compound is not particularly limited, and any conventionally known one can be used. Examples include e.g., isocyanate compounds such as toluylene diisocyanate, 4,4'-diphenylmethane diisocyanate, hexamethyl diisocyanate, xylylene diisocyanate, metaxylylene diisocyanate, 1,5-naphthalene diisocyanate, hydrogenated diphenylmethane diisocyanate, hydrogenated toluylene diisocyanate, hydrogenated xylylene diisocyanate, and isophorone diisocyanate. These can be used alone, or two or more can be also used in combination. In addition, block isocyanate may be also used.

In order to achieve much better weather resistance, a diisocyanate compounds not having an aromatic ring such as, for example, hexamethylene diisocyanate, hydrogenated diphenylmethane diisocyanate is preferably used as the polyfunctional isocyanate compound (b).

### <Position and Number of Polymerizable Carbon-Carbon Double Bond-Containing Group of Vinyl Polymer (I)>

There exist one or more polymerizable carbon-carbon double bond-containing groups of the vinyl polymer (I) of the present invention at two or more molecular ends each. When two or more groups are present on only one end, just the effect not greatly different from that of the monofunctional type can be achieved.

The vinyl polymer (I) may be either straight, or branched. When it is straight, the polymerizable carbon-carbon double bond-containing group is present at both ends. When it is branched, the polymerizable carbon-carbon double bond-containing group is present at two or more ends among its multiple ends.

The number of the polymerizable carbon-carbon double bond-containing group of the vinyl polymer (I) of the present invention is not limited, but is preferably two.

The number of the polymerizable carbon-carbon double bond-containing group referred to herein means not a mean value, but the number in a given polymer molecule. More specifically, for example, even in the case in which a polymer having two carbon-carbon double bond-containing groups in the single polymer molecule is included as the principal component, when a small amount of the polymer that has less than two carbon-carbon double bond-containing groups is contaminated, the number of the carbon-carbon double bond-containing group as a "mean value" can be the value of less than two. Further, when the molecular weight determined on gel permeation chromatography (GPC) is used for calculating the number of the functional group in the polymer, the molecular weight may include an error to some extent because the determination is made by a standard polystyrene conversion process. Thus, the number of the carbon-carbon double bond-containing group as an "analytical value" can be the value of less than two.

### <<Addition Polymerizable Monomer for Producing Thermoplastic Resin by Addition Polymerization>>

The addition polymerizable monomer used in the present invention for producing the thermoplastic resin by addition polymerization is not limited, but radical polymerizable monomers and anion polymerizable monomers are preferred, and radical polymerizable monomers are more preferred.

Any one can be used as long as it is a common radical polymerizable vinyl monomer, and the monomer constituting the main chain of the vinyl polymer (I) described above may be exemplified. The radical polymerizable monomer preferably includes a monomer selected from the group consisting of (meth)acrylic monomers, acrylonitrile monomers, aromatic vinyl monomers, vinyl ester monomers, halogenated vinyl monomers, fluorine-containing vinyl monomers, and silicon-containing vinyl monomers as a principal component, but not limited thereto. Among these, it is preferred to use at least one of vinyl chloride, (meth)acrylic esters, acrylonitrile and styrene in light of general versatility of the monomer. These vinyl monomers may be used alone, or two or more of them may be used as a mixture. Taking into consideration the object of the method of improving the properties of the thermoplastic resin according to the present invention, a different type of the monomer from the monomer component forming the vinyl polymer (I) is preferably used as this vinyl monomer.

The anion polymerizable monomer is not limited, but is preferably a (meth)acrylic monomer, an aromatic vinyl monomer, or a diene monomer. More specifically, styrene, a methacrylic ester, butadiene, or isoprene is preferred.

### <<Addition Polymerization for Producing Thermoplastic Resin>>

The addition polymerization for producing the thermoplastic resin of the present invention is not limited, but is preferably radical polymerization or anion polymerization, and radical polymerization is more preferred.

The radical polymerization is not particularly limited, and any method such as common free radical polymerization, chain transfer radical polymerization or living radical polymerization may be performed.

Moreover, any of solution polymerization, bulk polymerization, aqueous polymerization may be carried out. As industrial polymerization process of the thermoplastic resin, the aqueous polymerization is most common, therefore, application of the present invention to this system is preferred but not limited thereto. In addition, the aqueous polymerization may be either emulsion polymerization or suspension polymerization. However, since some of the polymer (I) may not be water soluble, the suspension polymerization including microsuspension polymerization is more preferred.

The initiator which may be used in the free radical polymerization is not particularly limited, and examples thereof include radical initiators such as organic peroxides such as benzoyl peroxide, lauroyl peroxide, t-butyl perbenzoate, t-butyl perpivalate, t-butylperoxyisopropyl carbonate, t-butyl peroxyacetate, 2,2-di-t-butyl peroxybutane, di-t-butylperoxyhexahydroterephthalate, 1,1-di(t-butylperoxy)3,3,5-trimethylcyclohexane, 1,1-di(t-butylperoxy)cyclohexane, 1,1-di(t-amylperoxy)3,3,5-trimethylcyclohexane and 1,1-di(t-amylperoxy)cyclohexane, azo compounds such as 2,2'-azobisisobutyronitrile, 2,2'-azobis(4-methoxy-2,4-dimethylvaleronitrile), 2,2'-azobis(2-cyclopropylpropionitrile) and 2,2'-azobis(2-methylbutyronitrile).

The chain transfer radical polymerization is carried out through adding the chain transfer agent to the free radical polymerization. As the initiator, one as described above can be used. The chain transfer agent is not particularly limited, and n-dodecyl mercaptan, t-dodecyl mercaptan, n-octyl mercaptan, n-octadecyl mercaptan, 3-mercaptopropyl trimethoxysilane, 3-mercaptopropyl triethoxysilane, 3-mercaptopropylmethyldimethoxy silane, 3-mercaptopropylmethyl diethoxysilane, (H₃CO)₃Si-S-S-Si(OCH₃)₃, CH₃(H₃CO)₂Si-S-S-SiCH₃(OCH₃)₂, (C₂H₅O)₃Si-S-S-Si(OC₂H₅)₃, CH₃(C₂H₅O)₂Si-S-S-SiCH₃(OC₂H₅)₂, (H₃CO)₃Si-S₃-Si(OCH₃)₃, (H₃CO)₃Si-S₄-Si(OCH₃)₃, (H₃CO)₃Si-S₆-Si(OCH₃)₃, α-methylstyrene dimer, can be used. When the chain transfer agent including, in particular, an alkoxysilyl group in the molecule, for example, 3-mercaptopropyltrimethoxysilane is used, the alkoxysilyl group can be introduced at the end.

The living radical polymerization is not limited, and examples thereof include SFRP (Stable Free Radical Polymerization) in which the polymerization growing end radical is scavenged by TEMPO (tetramethylpiperidineoxide), a cobalt porphyrin complex and atom transfer radical polymerization described above for the production of the vinyl polymer (I) of the present invention. Such polymerization is carried out under conditions described previously. When the vinyl polymer (I) is polymerized by living radical polymerization, the molecular weight and the molecular weight distribution of the polymer chain obtained by this polymerization are expected to be controlled.

The method of the radical polymerization of the present invention is not particularly limited, but in general, the temperature falls within the range of preferably 50 to 250°C, the range of more preferably 70 to 200°C, although it may vary depending on types of the used radical initiator, vinyl polymer (I), radical polymerizable monomer, and the added compound.

As the suspension stabilizer used when the suspension polymerization is carried out in the present invention, for example, water soluble macro molecules such as polyvinyl alcohol, methylcellulose, polyvinylpyrrolidone and polyacrylamide, hardly soluble inorganic salts such as magnesium pyrophosphate, calcium phosphate and hydroxyapatite can be used. Additionally, a surfactant may be used in combination. When the hardly soluble inorganic salt is used, it is preferred to use an anionic surfactant such as sodium alkylsulfonate or sodium dodecylbenzenesulfonate in combination.

For the anion polymerization in the present invention, any known technique can be employed.
The anion polymerization initiator which may be used is not limited, and it is preferred to use a mono-, bi- or poly-functional alkyl, aryl or aralkyl compound of an alkali metal; an organic lithium compound, e.g., ethyl-, propyl-, isopropyl-, n-butyl-, sec-butyl-, tert-butyl-, phenyl-, diphenylhexyl-, hexamethylenedi-, butanedienyl-, isoprenyl- or polystyryl lithium, or a polyfunctional compound thereof, 1,4-dilithiobutane, 1,4-dilithio-2-butene or 1,4-dilithiobenzene. The amount of required alkali metal organic compound depends on the molecular weight of the polymer to be produced, and type and amount of the used other metal organic compound, and further, also depends on the polymerization temperature. The required amount is generally 0.002 to 5% by mole per total amount of the monomer.

The polymerization can be carried out in the absence or presence of a solvent. Although the solvent is not limited, preferably organic hydrocarbon or a hydrocarbon mixture, for example, benzene, toluene, ethylbenzene, xylene or cumene may be exemplified. The polymerization is preferably carried out at a content of the solvent of less than 40% by weight. In this step, the reaction rate can be decreased by adding a compound that lowers the polymerization velocity and that is known as a retardant as described in WO 98/07766. As the retardant which may be used is an organic magnesium compound, an organic aluminum compound, or an organic zinc compound, which can be used alone, or as a mixture.

### <<Amount of Added Vinyl Polymer (1)>>

In the step of producing the thermoplastic resin by the addition polymerization of the addition polymerizable monomer, the amount of the vinyl polymer (I) having one or more polymerizable carbon-carbon double bond-containing groups at two or more molecular ends each is as defined in the annexed claims. Since the vinyl polymer (I) has multiple polymerizable groups, the modified resin may loose thermoplasticity when the amount is too large. To the contrary, when the amount is too small, the effect of the modification cannot be achieved. Therefore, the weight percentage in the entire produced resin, i.e., the weight percentage per total weight of the constitutive components of the thermoplastic resin is 1% or more, preferably 2% or more, and more preferably 3% or more. Also, the weight percentage is 20% or less, and preferably 10% or less. The total weight of the entire produced resin herein refers to total weight of the addition polymerizable monomer and the vinyl polymer (I) that are the constitutive components of the thermoplastic resin.

When the number of the functional group is the same, the resulting resin is less likely to be gelatinized when the molecular weight of the polymer (I) is greater at the same amount of the addition. The resulting resin is more likely to be gelatinized when the number of the functional group is greater at the same amount of the addition.

### <<Compound of Modified Thermoplastic Resin>>

The modified thermoplastic resin of the present invention can be used as a blend with other resin, or as an additive for other resins. More specifically, it can be used as an impact resistance improving agent, a processibility improving agent, a compatibility accelerator, a delustering agent, a heat resistance improving agent.

Examples of the thermoplastic resin which may be blended with or to which may be added the modified thermoplastic resin of the present invention include a polymethyl methacrylate resin, a polyvinyl chloride resin, a polyethylene resin, a polypropylene resin, a cyclic olefin copolymerized resin, a polycarbonate resin, a polyester resin, a mixture of a polycarbonate resin and a polyester resin, homopolymers or copolymers obtained by polymerization of 70 to 100% by weight of at least one vinyl monomer selected from the group consisting of an aromatic alkenyl compound, a vinyl cyanide compound and a (meth)acrylic ester, and 0 to 30% by weight of other vinyl monomer which can be copolymerized with these vinyl monomers, e.g., ethylene, propylene, vinyl acetate or the like, and (or) a conjugated diene monomer such as butadiene or isoprene; polystyrene resins, polyphenylene ether resins, mixtures of a polystyrene resin and a polyphenylene ether resin, but not limited thereto, and a wide variety of thermoplastic resin can be used. In particular, polymethyl methacrylate resins, polyvinyl chloride resins, polypropylene resins, cyclic polyolefin resins, polycarbonate resin, polyester resin are preferred because characteristics such as weather resistance and impact resistance can be readily achieved.

As other additive, a fire retardant, an antimicrobial agent, a light stabilizer, a colorant, a flow performance improving agent, a lubricant, an antiblocking agent, an antistatic agent, a crosslinking agent, a crosslinking activator, a modifier, a pigment, a dye, an electric conductive filler, a variety of chemical foaming agents, a physical foaming agent can be added. These may be used alone, or two or more can be used in combination. As the antiblocking agent, for example, silica, zeolite is suitable, which may be either naturally occurring or synthetic. Also, spherical crosslinked particles such as crosslinked acryl spherical particles are suitable. Moreover, as the antistatic agent, N,N-bis-(2-hydroxyethyl)-alkylamines that include an alkyl group having 12 to 18 carbon atoms, and glycerin fatty acid esters are preferred. Furthermore, as the lubricant, a fatty acid metal salt-based lubricant, a fatty acid amide-based lubricant, a fatty acid ester-based lubricant, a fatty acid-based lubricant, an aliphatic alcohol-based lubricant, a partial ester of a fatty acid and a polyhydric alcohol, a paraffin-based lubricant, is preferably used, and two or more may be selected for use among these.

The resin composition according to the present invention can be produced by the method illustrated below.
For example, when it is produced using a sealed or open batch-wise kneading apparatus such as a Laboplast Mill, Brabender, banbury mixer, kneader, roller, all components except for the crosslinking agent which had been mixed beforehand are placed into the kneading apparatus, and melted and kneaded until a homogenous state is attained, followed by adding thereto a crosslinking agent. After proceeding the crosslinking reaction enough, the melting and molting is stopped.
Moreover, when it is produced using a continuous melting and kneading apparatus such as a single screw extruder, a biaxial extruder, a method in which all components other than the crosslinking agent are melted and kneaded beforehand with the melting and kneading apparatus such as an extruder until a homogenous state is attained, followed by pelletization, and after dry blending the crosslinking agent with the pellet, the blend is further melted and kneaded with a melting and kneading apparatus such as an extruder or banbury mixer, to permit dynamic crosslinking of the isobutylene polymer that has an alkenyl group at the end; a method in which all components other than the crosslinking agent are melted and kneaded with the melting and kneading apparatus such as an extruder, and the crosslinking agent is added thereto from the midpoint of the cylinder of the extruder followed by additional melting and kneading to permit dynamic crosslinking of the isobutylene polymer that has an alkenyl group at the end, may be exemplified.

Upon the melting and kneading, the temperature range of 140 to 210°C is preferred, and the temperature range of 150 to 200°C is more preferred. When the melting and kneading temperature is lower than 140°C, the aromatic vinyl-based thermoplastic elastomer and the olefin based resin are not melted, and thus it is likely to fail achieving sufficient mixing. To the contrary, when the temperature is higher than 210°C, it is likely that thermal degradation of the isobutylene polymer is caused.

As the process for compounding the modified thermoplastic resin of the present invention, a process in which a known apparatus such as a Laboplast Mill, Brabender, banbury mixer, kneader, roller, single screw extruder, a biaxial extruder is used to mechanically mix and form to have a pellet-like shape may be exemplified. The extruded and formed pellet can be molded at a broad temperature range. For the molding, a general injection molding machine, blow molding machine, extrusion molding machine is used.

Moreover, into the modified thermoplastic resin of the present invention, can be blended an impact resistance improving agent, a stabilizer, a plasticizer, a lubricant, a fire retardant, a pigment, a filler as needed. Specific examples include impact resistance improving agents such as methyl methacrylate-butadiene-styrene copolymer (MBS resin), acrylic graft copolymer, and acryl-silicone complexed rubber-based graft copolymer; stabilizers such as triphenyl phosphite; lubricants such as polyethylene wax and polypropylene wax; phosphate-based fire retardants such as triphenyl phosphate and tricresyl phosphate, bromine-based fire retardants such as decabromobiphenyl and decabromobiphenyl ether, fire retardants such as antimony trioxide; pigments such as titanium oxide, zinc sulfide and zinc oxide; fillers such as glass fiber, asbestos, wollastonite, mica, talc and calcium carbonate.

In the modified thermoplastic resin of the present invention can be arbitrarily used a conventionally known antioxidant, ultraviolet ray absorbing agent as needed.

As the plasticizer, phthalic acid esters such as dibutyl phthalate, diheptyl phthalate, di(2-ethylhexyl) phthalate and butylbenzyl phthalate; nonaromatic dibasic acid bases such as dioctyl adipate and dioctyl sebacate; esters of polyalkylene glycol such as diethylene glycol dibenzoate and triethylene glycol dibenzoate; phosphoric acid esters such as tricresyl phosphate and tributyl phosphate; chlorinated paraffins; hydrocarbon-based oils such as alkyldiphenyl and partially hydrogenated terphenyl can be used for the purpose of adjusting the physical properties, regulating the characters and the like, alone, or as a mixture of two or more thereof, but not necessary. These plasticizers can be also blended in production of the polymer.

Examples of the solvent include e.g., aromatic hydrocarbon solvents such as toluene and xylene, ester solvents such as ethyl acetate, butyl acetate, amyl acetate and cellosolve acetate, ketone solvents such as methyl ethyl ketone, methyl isobutyl ketone and diisobutyl ketone. These solvents may be used in production of the polymer.

### <<Application>>

The modified thermoplastic resin of the present invention can be formed into a desired shape by a variety of molding methods. The molded product has characteristics such as high impact strength. Although the molding method is not limited, specific examples include calender molding, injection molding, melt spinning, blow molding, extrusion molding, hot molding, foam molding.

The modified thermoplastic resin of the present invention can be used in applications similar to preexisting thermoplastic resins but not limited thereto. Preferably, it can be utilized as injection molded products, sheets, films, hollow molded products, pipes, square bars, odd-shaped products, hot molded products, foams, fibers.
The modified thermoplastic resin of the present invention can be present in from soft form to hard form.

When the thermoplastic resin and the compound thereof of the present invention are soft, they can be utilized in the following applications.

### (1) Modifiers

Resin modifiers (impact resistance modifiers, vibration-damping properties modifiers, gas barrier properties modifiers, softening agents of thermoplastic resins, impact resistance modifiers, stress-reducing agents of thermosetting resins), asphalt modifiers (modifiers of asphalt for roads, modifiers of asphalt for waterproof sheets, waterproof materials for bridge base plates), tire modifiers (improvers of wet gripping properties of tires), rubber modifiers.

### (2) Adhesives or Agglutinants

Hot melt adhesive, water borne adhesives, solvent borne adhesives, agglutinants.

### (3) Viscosity Modifiers

Viscosity modifiers added to oils, lubricating oils.

### (4) Coating Agents

Base resins used for paints and the like, sealants.

### (5) Materials used for PVC alternatives

Coating materials for electric wires of cables, connectors, plugs, toys such as dolls, tapes for care, logos (for sports clothes and athletic shoes), carry bags, packing materials for garments, hoods for cargo tracks, films for agricultural use (for growing in greenhouse), gum erasers, service aprons (tarpaulin), interior materials for buildings such as floor covers, ceiling materials, rain coats, umbrellas, shopping bags, cover materials of chairs, sofas, cover materials of belts, bags and the like, garden hoses, gaskets for refrigerators (packings), flexible hoses for clothes washers and sweepers, interior materials for automobiles.

### (6) Damping Materials, Vibration Isolators, Cushioning Materials

Damping materials, particularly damping materials laminated with aluminum and steel plate to give multiple layers, vibration isolators, cushioning materials (for use in architectural applications, automotive applications, floor damping applications, flooring applications, play tool applications, precision instrument applications, electronic equipment applications),
shoe soles, grips for stationeries and toys, grips for miscellaneous daily goods and carpenter's tools, grips and core material for golf clubs and bats, rubbers and grips in rackets for tennis and table tennis.

### (7) Sound Insulating Materials, Sound Absorbing Materials

Automotive exterior and Interior materials, automotive ceiling materials ceiling materials, materials for railway vehicles, materials for pipe fitting.

### (8) Sealing Materials, Packaging Materials such as Packing Materials, Seal Materials

Gaskets, architectural gaskets, closures,

glass seal materials for laminated glasses and multilayer glasses,

materials for gas barrier such as packaging materials, sheets, multilayer sheets, vessels, multilayer vessels,

sheets for civil engineering, waterproof sheets, transport packaging materials, sealants.

### (9) Foams

Beads foams, depressurizing foams, foams obtained by expansion extrusion (coating materials for pipe fitting, synthetic woods, wood-base foams),

carriers of foaming agents in chemical foams and physical foams.

### (10) Others

Clothing applications, fire retardant applications,
tubes for medical applications, closure devices, caps, bags, gaskets, hoses, shoes, exercise equipments,
foamed fire proof sheets,
air bag covers, bumpers, interior parts (cover materials of instrument panels and shift knobs), members for automobiles such as weather strips, roof moldings, lower door moldings,
vessels for foods such as food trays for microwave oven, food vessels for portions, laminate films for food vessels, polystyrene sheets for food vessels (vessels for raw fish, packages for eggs), vessels for instant noodles, polystyrene mesh foams, cups for freezing, transparent cups for beverages,
IC trays, CD-ROM chassis, wheel caps, elastic yarns, nonwoven fabrics, wire harnesses, back sheets for disposable diapers, compounding materials for two-color molding, goggles for use in water, mouses for personal computers, cushions, stoppers.

The modified thermoplastic resin of the present invention is also utilized in electric, electronic parts, machine component applications. Specific examples include e.g., connectors, coil bobbins, a variety of sockets, capacitors, variable capacitors, optical pickups, a variety of terminal boards, plugs, magnetic head bases, automotive pipes, air intake nozzles, intake manifolds, carburetors, lamp sockets, lamp reflectors, lamp housings.

### EXAMPLES

Hereinafter, specific Example of the present invention will be explained with reference to Comparative Examples, but the present invention is not limited to the following Examples.
Furthermore, in the following Examples, "number average molecular weight" and molecular weight distribution (ratio of weight average molecular weight and number average molecular weight)" were determined by a standard polystyrene conversion process using gel permeation chromatography (GPC). In this process, the GPC column employed was packed with polystyrene crosslinked gel (Shodex GPC K-804; manufactured by Showa Denko K.K.), and chloroform was used as the GPC solvent.
In the following Examples, "number of mean end acryloyl groups" is "number of introduced acryloyl groups per molecule of the polymer" and calculated from the number average molecular weight determined by ¹H-NMR analysis and GPC.
The "part" in the following Examples represents "part by weight"

### (Production Example 1) Polymerization and Purification of Poly (n-Butyl Acrylate) having Acryloyl Group at Both Ends

Polymerization and purification were carried out according to the method described in Production Example 2 and Example 2 of Japanese Unexamined Patent Application Publication No. 2004-203932. More specifically, to a reaction vessel equipped with an agitator were added CuBr (4.2 parts), acetonitrile (44.0 parts), n-butyl acrylate (100 parts) and diethyl 2,5-dibromoadipate (8.8 parts), and the mixture was stirred at 80°C under a nitrogen atmosphere. Thereto was added pentamethyldiethylenetriamine (hereinafter, may be merely referred to as "triamine") (0.17 parts) to initiate polymerization. During this step, n-butyl acrylate (400 parts) was continuously added dropwise, and while adding triamine ad libitum, the reaction solution was heated and stirred such that the temperature was kept at 80°C to 90°C to obtain a polymer having bromine group at both ends.
Thus resulting polymer having bromine group at both ends (100 parts) was dissolved in N,N-dimethylacetamide (100 parts), and potassium acrylate (1.80 parts) and 4-hydroxy-2,2,6,6-tetramethyl-1-oxyl-piperidine (0.01 parts) were added thereto. The mixture was heated and stirred at 70°C to obtain poly (n-butyl acrylate) having acryloyl group at both ends (polymer [1]). The polymer after purification had a number average molecular weight of 23000, molecular weight distribution of 1.15, and average number of end acryloyl group of 1.7.

### (Example 1)

Into a 6-L autoclave equipped with a rotating agitator were charged 2250 g of distilled water, 3.5 g of calcium triphosphate and 0.14 g of sodium α-olefin sulfonate. Next, in a mixed solution of 1778 g of styrene, 338 g of acrylonitrile, 135 g of the polymer [1] having acryloyl group at both ends obtained in Production Example 1 were dissolved 6 g of benzoyl peroxide, 3.5 g of 1,1-di(t-butylperoxy)cyclohexane, 4.5 g of 2,4-diphenyl-4-methyl-1-pentene and 22.5 g of coconut oil, and the mixture was charged in an autoclave. Subsequently, the temperature of the autoclave was elevated to 85°C, and polymerization was allowed at the same temperature for 4 hrs to obtain beads polymer [2].

### (Example 2)

Under a similar condition to Example 1, beads polymer [3] was obtained with the weight ratio of styrene/acrylonitrile/polymer [1]/coconut oil being 71.5/22.5/6/1.

### (Comparative Example 1)

Under a similar condition to Example 1, beads polymer [4] was obtained with the weight ratio of styrene/acrylonitrile/coconut oil being 76.1/23.9/1.

Using the polymers [2] to [4] obtained in Examples 1 and 2, and Comparative Example 1, test pieces were prepared, and physical properties of each polymer were evaluated as follows.

### [Preparation of test piece]

The polymers [2] to [4] obtained in Examples 1, 2 and Comparative Example 1 were molded into JIS K 6251 No. 3 dumbbell shape with an injection molding machine (injection molding machine having a mold clamping force of 30 tons) under conditions of: the nozzle setting temperature at 200°C, the mold temperature at 40°C, and the injection pressure at 40 kg/cm² to prepare test pieces.

### [Evaluation of Physical Properties]

Using the test piece prepared from each of the polymers [2] to [4], physical properties of each polymer were evaluated.

### (Thermoplasticity)

Visual inspection reveled that no defects were found on every test piece with respect to weld flash, surface sink, release performances and the like, and thus the modified resin also kept favorable thermoplasticity.

### (Flexibility)

Each test piece was clinched by hand until broken to evaluate the flexibility of the polymer. The polymer [4] was broken before the piece was clinched by 90°. In contrast, the polymers [2] and [3] were not broken even though they were clinched by 180° while keeping sufficient strength. Accordingly, they were proven to have imparted flexibility.

These results also suggest that the impact strength was also improved.

### (Tensile Physical Property)

Tensile physical properties were measured on each test piece by autograph in accordance with JIS K 7113, under a condition of test speed of 200 mm/min, at 23°C and 55% R. H. The results are shown in Table 1.

In Table 1, TM means maximum strength, and EB means elongation at break.

**[Table 1]**

| Polymer | TM (MPa) | EB (%) |
|---|---|---|
| [2] | 78 | 13 |
| [3] | 79 | 12 |
| [4] | 88 | 6 |

From these results, it was ascertained that the modified polymers [2] and [3] exhibited improved elongation at break without significant decrease in maximum strength.

### (Impact Resistance Test)

The polymer [2] obtained in Example 1, and the polymer [4] obtained in Comparative Example 1 were molded to give a test piece shape with an injection molding machine (injection molding machine having a mold clamping force of 30 tons) under conditions of: nozzle setting temperature at 200°C, the mold temperature at 40°C, and the injection pressure at 40 kg/cm² in accordance with JIS-K-7110 (Izod impact test method of hard plastic), and subjected to Izod impact test. The test conditions were: the measurement temperature at 23°C, the notch being V notch, the test piece thickness being 3.2 mm. The results are shown in Table 2.

**[Table 2]**

| Polymer | Impact strength (kgf.cm/cm) |
|---|---|
| [2] | 2.55 |
| [4] | 1.21 |

From these results, it was ascertained that the impact strength of the modified polymer [2] was improved.

## Claims

1. A thermoplastic resin obtainable by addition polymerization of an addition polymerizable monomer, the thermoplastic resin being modified by copolymerization of said addition polymerizable monomer with a vinyl polymer (I) that has one or more polymerizable carbon-carbon double bond-containing groups at two or more molecular ends each, and has a value of ratio (Mw/Mn) of the weight average molecular weight (Mw) to the number average molecular weight (Mn) being less than 1.8, and the weight percentage of the vinyl polymer (I) in the total weight of the addition polymerizable monomer and the vinyl polymer (I) is 1% or more and 20% or less.

2. The thermoplastic resin according to claim 1 wherein the main chain of the vinyl polymer (I) is obtainable by radical polymerization.

3. The thermoplastic resin according to claim 2 wherein the main chain of the vinyl polymer (I) is obtainable by living radical polymerization.

4. The thermoplastic resin according to claim 3 wherein the living radical polymerization is atom transfer radical polymerization.

5. The thermoplastic resin according to claim 4 wherein a metal complex used as a catalyst in the atom transfer radical polymerization, is a complex of copper.

6. The thermoplastic resin according to claim 1 wherein the main chain of the vinyl polymer (I) is obtainable by polymerization of a vinyl monomer using a chain transfer agent .

7. The thermoplastic resin according to any one of claims 1 to 6 wherein the main chain of the vinyl polymer (I) is obtainable by polymerization of predominantly a monomer selected from the group consisting of (meth)acrylic monomers, acrylonitrile monomers, aromatic vinyl monomers, fluorine-containing vinyl monomers and silicon-containing vinyl monomers.

8. The thermoplastic resin according to claim 7 wherein the main chain of the vinyl polymer (I) is obtainable by polymerization of predominantly a (meth)acrylic ester.

9. The thermoplastic resin according to claim 8 wherein the main chain of the vinyl polymer (I) is obtainable by polymerization of predominantly an acrylic ester

10. The thermoplastic resin according to any one of claims 1 to 9 wherein the vinyl polymer (I) has a number average molecular weight of equal to or greater than 3000.

11. The thermoplastic resin according to claim 10 wherein the vinyl polymer (I) has a number average molecular weight of equal to or greater than 5000.

12. The thermoplastic resin according to claim 11 wherein the vinyl polymer (I) has a number average molecular weight of equal to or greater than 10000.

13. The thermoplastic resin according to any one of claims 1-12 wherein the vinyl polymer (I) has a value of ratio (Mw/Mn) of the weight average molecular weight (Mw) to the number average molecular weight (Mn) measured with gel permeation chromatography of equal to or less than 1.5

14. The thermoplastic resin according to claim 13 wherein the vinyl polymer (I) has a value of ratio (Mw/Mn) of the weight average molecular weight (Mw) to the number average molecular weight (Mn) measured with gel permeation chromatography of equal to or less than 1.3.

15. The thermoplastic resin according to any one of claims 1 to 14 wherein the polymerizable carbon-carbon double bond-containing group in the vinyl polymer (I) is a group represented by the general formula 1:
-OC(O)C(R)=CH₂ (1)
wherein R represents hydrogen, or an organic group having 1 to 20 carbon atoms.

16. The thermoplastic resin according to claim 15 wherein R in the above general formula 1 is hydrogen, or a methyl group.

17. The thermoplastic resin according to any one of claims 1 to 14 wherein the polymerizable carbon-carbon double bond-containing group in the vinyl polymer (I) is a carbon-carbon double bond conjugated with other carbon-carbon double bond.

18. The thermoplastic resin according to claim 17 wherein the polymerizable carbon-carbon double bond-containing group in the vinyl polymer (I) is a carbon-carbon double bond conjugated with an aromatic ring.

19. The thermoplastic resin according to any one of claims 1 to 18 wherein the vinyl polymer (I) is obtainable by substituting a halogen group at the end of a vinyl polymer with a compound having a radical polymerizable carbon-carbon double bond.

20. The thermoplastic resin according to claim 19 wherein the vinyl polymer (I) is obtainable by substituting the halogen group at the end of a vinyl polymer represented by the general formula 2:
-CR¹R²X (2)
wherein R¹ and R² represent a group bound to an ethylenic unsaturated group of a vinyl monomer; and X represents chlorine, bromine, or, iodine
with a compound represented by the general formula 3:
M⁺OC(O)C(R)=CH₂ (3)
wherein R represents hydrogen, or an organic group having 1 to 20 carbon atoms; and M⁺ represents an alkali metal, or a quaternary ammonium ion.

21. The thermoplastic resin according to any one of claims 1 to 18 wherein the vinyl polymer (I) is obtainable by allowing a vinyl polymer that has a hydroxyl group at the end to react with a compound represented by the general formula 4:
XC(O)C(R)=CH₂ (4)
wherein R represents hydrogen, or an organic group having 1 to 20 carbon atoms; and X represents chlorine, bromine, or a hydroxyl group.

22. The thermoplastic resin according to any one of claims 1 to 18 wherein the vinyl polymer (I) is obtainable by allowing a vinyl polymer that has a hydroxyl group at the end to react with a diisocyanate compound, and allowing the residual isocyanate group to react with a compound represented by the general formula 5:
HO-R'-OC(O)C(R)=CH₂ (5)
wherein R represents hydrogen, or an organic group having 1 to 20 carbon atoms; and R' represents a bivalent organic group having 2 to 20 carbon atoms.

23. The thermoplastic resin according to any one of claims 1 to 22 wherein the vinyl polymer (I) is a straight polymer.

24. The thermoplastic resin according to any one of claims 1 to 22 wherein the vinyl polymer (I) is a branched polymer.

25. The thermoplastic resin according to any one of claims 1 to 24 wherein the addition polymerizable monomer is a radical polymerizable monomer.

26. The thermoplastic resin according to claim 25 wherein the radical polymerizable monomer comprises as a principal component a monomer selected from the group consisting of (meth)acrylic monomers, acrylonitrile monomers, aromatic vinyl monomers, vinyl ester monomers, halogenated vinyl monomers, fluorine-containing vinyl monomers and silicon-containing vinyl monomers.

27. The thermoplastic resin according to claim 26 wherein the radical polymerizable monomer comprisess styrene and/or acrylonitrile as a principal component .

28. The thermoplastic resin according to claim 26 wherein the radical polymerizable monomer comprises vinyl chloride as a principal component .

29. The thermoplastic resin according to claim 26 wherein the radical polymerizable monomer comprises a (meth)acrylic ester as a principal component.

30. The thermoplastic resin according to any one of claims 1 to 24 wherein the addition polymerizable monomer is an anion polymerizable monomer.

31. The thermoplastic resin according to claim 30 wherein the anion polymerizable monomer comprises as a principal component at least one monomer selected from the group consisting of (meth)acrylic monomers, aromatic vinyl monomers, and diene monomers.

32. The thermoplastic resin according to claim 31 wherein the anion polymerizable monomer comprises styrene as a principal component.

33. The thermoplastic resin according to claim 31 wherein the anion polymerizable monomer comprises a (meth)acrylic ester as a principal component.

34. The thermoplastic resin according to claim 31 wherein the anion polymerizable monomer comprises butadiene and/or isoprene as a principal component.

35. The thermoplastic resin according to any one of claims 25 to 29 wherein the addition polymerization is radical polymerization.

36. The thermoplastic resin according to claim 35 wherein the radical polymerization is aqueous polymerization.

37. The thermoplastic resin according to claim 36 wherein the aqueous polymerization is suspension polymerization.

38. The thermoplastic resin according to claim 36 wherein the aqueous polymerization is emulsion polymerization.

39. The thermoplastic resin according to claim 35 wherein the radical polymerization is solution polymerization.

40. The thermoplastic resin according to claim 35 wherein the radical polymerization is bulk polymerization.

41. The thermoplastic resin according to claim 35 wherein the radical polymerization is living radical polymerization.

42. The thermoplastic resin according to claim 41 wherein the living radical polymerization is atom transfer radical polymerization

43. The thermoplastic resin according to any one of claims 30 to 34 wherein the addition polymerization is anion polymerization.

## Patentansprüche

1. Ein thermoplastisches Harz, erhältlich durch Additionspolymerisation eines additionspolymerisierbaren Monomers, wobei das thermoplastische Harz durch Copolymerisieren des additionspolymerisierbaren Monomers mit einem Vinylpolymer (I) modifiziert ist, welches jeweils eine oder mehr polymerisierbare Kohlenstoff-Kohlenstoff-Doppelbindungen enthaltende Reste an zwei oder mehr Molekülenden aufweist und einen Wert des Verhältnisses (Mw/Mn) des Gewichtsmittels des Molekulargewichts (Mw) zu dem Zahlenmittel des Molekulargewichts (Mn) von weniger als 1,8 aufweist, und der gewichtsprozentuale Anteil des Vinylpolymers (I) am Gesamtgewicht des additionspolymerisierbaren Monomers und des Vinylpolymers (I) 1 % oder mehr und 20% oder weniger beträgt.

2. Das thermoplastische Harz gemäß Anspruch 1, wobei die Hauptkette des Vinylpolymers (I) durch Radikalpolymerisation erhältlich ist.

3. Das thermoplastische Harz gemäß Anspruch 2, wobei die Hauptkette des Vinylpolymers (I) durch lebende Radikalpolymerisation erhältlich ist.

4. Das thermoplastische Harz gemäß Anspruch 3, wobei die lebende Radikalpolymerisation eine Radikalpolymerisation mit Atomübertragung ist.

5. Das thermoplastische Harz gemäß Anspruch 4, wobei ein Metallkomplex, der in der Radikalpolymerisation mit Atomübertragung als Katalysator verwendet wird, ein Kupferkomplex ist.

6. Das thermoplastische Harz gemäß Anspruch 1, wobei die Hauptkette des Vinylpolymers (I) durch Polymerisieren eines Vinylmonomers unter Verwendung eines Kettenübertragungsmittels erhältlich ist.

7. Das thermoplastische Harz gemäß einem der Ansprüche 1 bis 6, wobei die Hauptkette des Vinylpolymers (I) durch Polymerisieren von vorwiegend einem Monomer ausgewählt aus der Gruppe bestehend aus (meth)acrylischen Monomeren, Acrylnitrilmonomeren, aromatischen Vinylmonomeren, Fluor enthaltenden Vinylmonomeren und Silizium enthaltenden Vinylmonomeren erhältlich ist.

8. Das thermoplastische Harz gemäß Anspruch 7, wobei die Hauptkette des Vinylpolymers (I) durch Polymerisieren von vorwiegend einem (Meth)acrylsäureester erhältlich ist.

9. Das thermoplastische Harz gemäß Anspruch 8, wobei die Hauptkette des Vinylpolymers (I) durch Polymerisieren von vorwiegend einem acrylischen Ester erhältlich ist.

10. Das thermoplastische Harz gemäß einem der Ansprüche 1 bis 9, wobei das Vinylpolymer (I) ein Zahlenmittel des Molekulargewichts gleich oder größer als 3000 aufweist.

11. Das thermoplastische Harz gemäß Anspruch 10, wobei das Vinylpolymer (I) ein Zahlenmittel des Molekulargewichts gleich oder größer als 5000 aufweist.

12. Das thermoplastische Harz gemäß Anspruch 11, wobei das Vinylpolymer (I) ein Zahlenmittel des Molekulargewichts gleich oder größer als 10000 aufweist.

13. Das thermoplastische Harz gemäß einem der Ansprüche 1 bis 12, wobei das Vinylpolymer (I) einen Wert des Verhältnisses (Mw/Mn) des Gewichtsmittels des Molekulargewichts (Mw) zu dem Zahlenmittel des Molekulargewichts (Mn), gemessen mit Gelpermeationschromatographie, von gleich oder weniger als 1,5 aufweist.

14. Das thermoplastische Harz gemäß Anspruch 13, wobei das Vinylpolymer (I) einen Wert des Verhältnisses (Mw/Mn) des Gewichtsmittels des Molekulargewichts (Mw) zu dem Zahlenmittel des Molekulargewichts (Mn), gemessen mit Gelpermeationschromatographie, von gleich oder weniger als 1,3 aufweist.

15. Das thermoplastische Harz gemäß einem der Ansprüche 1 bis 14, wobei der Rest mit polymerisierbarer Kohlenstoff Kohlenstoff Doppelbindung in dem Vinylpolymer (I) ein Rest, dargestellt durch die allgemeine Formel 1, ist:
-OC(O)C(R)=CH₂ (1)
wobei R Wasserstoff oder einen organischen Rest mit 1 bis 20 Kohlenstoffatomen darstellt.

16. Das thermoplastische Harz gemäß Anspruch 15, wobei R in der oben genannten allgemeinen Formel 1 Wasserstoff oder eine Methylgruppe ist.

17. Das thermoplastische Harz gemäß einem der Ansprüche 1 bis 14, wobei der Rest mit polymerisierbarer Kohlenstoff-Kohlenstoff-Doppelbindung des Vinylpolymers (I) eine Kohlenstoff Kohlenstoff Doppelbindung ist, die mit einer anderen Kohlenstoff-Kohlenstoff-Doppelbindung konjugiert ist.

18. Das thermoplastische Harz gemäß Anspruch 17, wobei der Rest mit polymerisierbarer Kohlenstoff-Kohlenstoff-Doppelbindung des Vinylpolymers (I) eine Kohlenstoff-Kohlenstoff-Doppelbindung ist, die mit einem aromatischen Ring konjugiert ist.

19. Das thermoplastische Harz gemäß einem der Ansprüche 1 bis 18, wobei das Vinylpolymer (I) durch Substituieren einer Halogengruppe am Ende eines Vinylpolymers mit einer Verbindung, die eine radikalisch polymerisierbare Kohlenstoff-Kohlenstoff-Doppelbindung aufweist, erhältlich ist.

20. Das thermoplastische Harz gemäß Anspruch 19, wobei das Vinylpolymer (I) erhältlich ist durch Substituieren der Halogengruppe am Ende eines Vinylpolymers, die durch die allgemeine Formel 2 dargestellt ist:
-CR¹R²X (2)
wobei R¹ und R² einen Rest darstellen, der an einen ethylenisch ungesättigten Rest eines Vinylmonomers gebunden ist; und X Chlor, Brom oder Iod darstellt, mit einer Verbindung, die durch die allgemeine Formel 3 dargestellt ist:
M⁺⁻OC(O)C(R)=CH₂ (3)
wobei R Wasserstoff oder einen organischen Rest mit 1 bis 20 Kohlenstoffatomen darstellt; und M⁺ ein Alkalimetal oder ein quartäres Ammoniumion darstellt.

21. Das thermoplastische Harz gemäß einem der Ansprüche 1 bis 18, wobei das Vinylpolymer (I) erhältlich ist durch Umsetzen eines Vinylpolymers, das eine Hydroxylgruppe am Ende aufweist, mit einer Verbindung, dargestellt durch die allgemeine Formel 4:
XC(O)C(R)=CH₂ (4)
wobei R Wasserstoff oder einen organischen Rest mit 1 bis 20 Kohlenstoffatomen darstellt; und X Chlor, Brom oder eine Hydroxylgruppe darstellt.

22. Das thermoplastische Harz gemäß einem der Ansprüche 1 bis 18, wobei das Vinylpolymer (I) erhältlich ist durch Umsetzen eines Vinylpolymers, das eine Hydroxylgruppe am Ende aufweist, mit einer Diisocyanatverbindung, und Umsetzen der verbleibenden Isocyanatgruppe mit einer Verbindung, dargestellt durch die allgemeine Formel 5:
HO-R'-OC(O)C(R)=CH₂ (5)
wobei R Wasserstoff oder einen organischen Rest mit 1 bis 20 Kohlenstoffatomen darstellt; und R' einen zweiwertigen organischen Rest mit 2 bis 20 Kohlenstoffatomen darstellt.

23. Das thermoplastische Harz gemäß einem der Ansprüche 1 bis 22, wobei das Vinylpolymer (I) ein gerades Polymer ist.

24. Das thermoplastische Harz gemäß einem der Ansprüche 1 bis 22, wobei das Vinylpolymer (I) ein verzweigtes Polymer ist.

25. Das thermoplastische Harz gemäß einem der Ansprüche 1 bis 24, wobei das additionspolymerisierbare Monomer ein radikalisch polymerisierbares Monomer ist.

26. Das thermoplastische Harz gemäß Anspruch 25, wobei das radikalisch polymerisierbare Monomer als Hauptkomponente ein Monomer umfasst, ausgewählt aus der Gruppe bestehend aus (meth)acrylischen Monomeren, Acrylnitrilmonomeren, aromatischen Vinylmonomeren, Vinylestermonomeren, halogenierten Vinylmonomeren, Fluor enthaltenden Vinylmonomeren und Silizium enthaltenden Vinylmonomeren umfasst.

27. Das thermoplastische Harz gemäß Anspruch 26, wobei das radikalisch polymerisierbare Monomer Styrol und/oder Acrylnitril als Hauptkomponente umfasst.

28. Das thermoplastische Harz gemäß Anspruch 26, wobei das radikalisch polymerisierbare Monomer Vinylchlorid als Hauptkomponente umfasst.

29. Das thermoplastische Harz gemäß Anspruch 26, wobei das radikalisch polymerisierbare Monomer einen (Meth)acrylsäureester als Hauptkomponente umfasst.

30. Das thermoplastische Harz gemäß einem der Ansprüche 1 bis 24, wobei das additionspolymerisierbare Monomer ein anionisch polymerisierbares Monomer ist.

31. Das thermoplastische Harz gemäß Anspruch 30, wobei das anionisch polymerisierbare Monomer als Hauptkomponente mindestens ein Monomer umfasst, ausgewählt aus der Gruppe bestehend aus (meth)acrylischen Monomeren, aromatischen Vinylmonomeren und Dienmonomeren.

32. Das thermoplastische Harz gemäß Anspruch 31, wobei das anionisch polymerisierbare Monomer Styrol als Hauptkomponente umfasst.

33. Das thermoplastische Harz gemäß Anspruch 31, wobei das anionisch polymerisierbare Monomer einen (Meth)acrylsäureester als Hauptkomponente umfasst.

34. Das thermoplastische Harz gemäß Anspruch 31, wobei das anionisch polymerisierbare Monomer Butadien und/oder Isopren als Hauptkomponente umfasst.

35. Das thermoplastische gemäß Harz gemäß einem der Ansprüche 25 bis 29, wobei die Additionspolymerisation eine Radikalpolymerisation ist.

36. Das thermoplastische Harz gemäß Anspruch 35, wobei die Radikalpolymerisation eine wässrige Polymerisation ist.

37. Das thermoplastische Harz gemäß Anspruch 36, wobei die wässrige Polymerisation eine Suspensionspolymerisation ist.

38. Das thermoplastische Harz gemäß Anspruch 36, wobei die wässrige Polymerisation eine Emulsionspolymerisation ist.

39. Das thermoplastische Harz gemäß Anspruch 35, wobei die Radikalpolymerisation eine Lösungspolymerisation ist.

40. Das thermoplastische Harz gemäß Anspruch 35, wobei die Radikalpolymerisation eine Massepolymerisation ist.

41. Das thermoplastische Harz gemäß Anspruch 35, wobei die Radikalpolymerisation eine lebende Radikalpolymerisation ist.

42. Das thermoplastische Harz gemäß Anspruch 41, wobei die lebende Radikalpolymerisation eine Radikalpolymerisation mit Atomübertragung ist.

43. Das thermoplastische Harz gemäß einem der Ansprüche 30 bis 34, wobei die Additionspolymerisation eine anionische Polymerisation ist.

## Revendications

1. Résine thermoplastique susceptible d'être obtenue par polymérisation par addition d'un monomère polymérisable par addition, la résine thermoplastique étant modifiée par copolymérisation dudit monomère polymérisable par addition avec un polymère de vinyle (I) qui a un ou plusieurs groupes contenant une double liaison carbone-carbone polymérisable à chacune de deux ou plus extrémités moléculaires, et a une valeur de rapport (Mw/Mn) de la masse moléculaire moyenne en masse (Mw) à la masse moléculaire moyenne en nombre (Mn) inférieure à 1,8, et le pourcentage en masse du polymère de vinyle (I) par rapport à la masse totale de monomère polymérisable par addition et du polymère de vinyle (I) est de 1 % ou plus et de 20 % ou moins.

2. Résine thermoplastique selon la revendication 1, dans laquelle la chaîne principale du polymère de vinyle (I) est susceptible d'être obtenue par polymérisation radicalaire.

3. Résine thermoplastique selon la revendication 2, dans laquelle la chaîne principale du polymère de vinyle (I) est susceptible d'être obtenue par polymérisation radicalaire vivante.

4. Résine thermoplastique selon la revendication 3, dans laquelle la polymérisation radicalaire vivante est une polymérisation radicalaire par transfert d'atomes.

5. Résine thermoplastique selon la revendication 4, dans laquelle un complexe métallique utilisé en tant que catalyseur dans la polymérisation radicalaire par transfert d'atomes est un complexe de cuivre.

6. Résine thermoplastique selon la revendication 1, dans lequel la chaîne principale du polymère de vinyle (I) est susceptible d'être obtenue par polymérisation d'un monomère de vinyle en utilisant un agent de transfert de chaîne.

7. Résine thermoplastique selon l'une quelconque des revendications 1 à 6, dans laquelle la chaîne principale du polymère de vinyle (I) est susceptible d'être obtenue par polymérisation principalement d'un monomère choisi dans le groupe constitué par les monomères (méth)acryliques, les monomères d'acrylonitrile, les monomères de vinyle aromatiques, les monomères de vinyle contenant du fluor et les monomères de vinyle contenant du silicium.

8. Résine thermoplastique selon la revendication 7, dans laquelle la chaîne principale du polymère de vinyle (I) est susceptible d'être obtenue par polymérisation principalement d'un ester (méth)acrylique.

9. Résine thermoplastique selon la revendication 8, dans laquelle la chaîne principale du polymère de vinyle (I) est susceptible d'être obtenue par polymérisation principalement d'un ester acrylique.

10. Résine thermoplastique selon l'une quelconque des revendications 1 à 9, dans laquelle le polymère de vinyle (I) a une masse moléculaire moyenne en nombre supérieure ou égale à 3000.

11. Résine thermoplastique selon la revendication 10, dans laquelle le polymère de vinyle (I) a une masse moléculaire moyenne en nombre supérieure ou égale à 5000.

12. Résine thermoplastique selon la revendication 11, dans laquelle le polymère de vinyle (I) a une masse moléculaire moyenne en nombre supérieure ou égale à 10 000.

13. Résine thermoplastique selon l'une quelconque des revendications 1 à 12, dans laquelle le polymère de vinyle (I) a une valeur de rapport (Mw/Mn) de la masse moléculaire moyenne en masse (Mw) à la masse moléculaire moyenne en nombre (Mn) mesurée par chromatographie par perméation de gel, inférieure ou égale à 1,5.

14. Résine thermoplastique selon la revendication 13, dans laquelle le polymère de vinyle (I) a une valeur de rapport (Mw/Mn) de la masse moléculaire moyenne en masse (Mw) à la masse moléculaire moyenne en nombre (Mn) mesurée par chromatographie par perméation de gel, inférieure ou égale à 1,3.

15. Résine thermoplastique selon l'une quelconque des revendications 1 à 14, dans laquelle le groupe contenant une double liaison carbone-carbone polymérisable dans le polymère de vinyle (I) est un groupe représenté par la formule générale (1) :
-OC(O)C(R)=CH₂ (1)
dans laquelle R représente un atome d'hydrogène ou un groupe organique comprenant de 1 à 20 atomes de carbone.

16. Résine thermoplastique selon la revendication 15, dans laquelle R dans la formule générale (1) ci-dessus est un atome d'hydrogène ou un groupe méthyle.

17. Résine thermoplastique selon l'une quelconque des revendications 1 à 14, dans laquelle le groupe contenant une double liaison carbone-carbone polymérisable dans le polymère de vinyle (I) est une double liaison carbone-carbone conjuguée à une autre double liaison carbone-carbone.

18. Résine thermoplastique selon la revendication 17, dans laquelle le groupe contenant une double liaison carbone-carbone polymérisable dans le polymère de vinyle (I) est une double liaison carbone-carbone conjuguée à un cycle aromatique.

19. Résine thermoplastique selon l'une quelconque des revendications 1 à 18, dans laquelle le polymère de vinyle (I) est susceptible d'être obtenu en substituant un groupe halogène à l'extrémité d'un polymère de vinyle par un composé ayant une double liaison carbone-carbone polymérisable par polymérisation radicalaire.

20. Résine thermoplastique selon la revendication 19, dans laquelle le polymère de vinyle (I) est susceptible d'être obtenu en substituant le groupe halogène à l'extrémité d'un polymère de vinyle représenté par la formule générale (2) :
-CR¹R²X (2)
dans laquelle R¹ et R² représentent un groupe lié à un groupe à insaturation éthylénique d'un monomère de vinyle ; et X représente un atome de chlore, de brome ou d'iode
par un composé représenté par la formule générale (3) :
M⁺⁻OC(O)C(R)=CH₂ (3)
dans laquelle R représente un atome d'hydrogène, ou un groupe organique comprenant de 1 à 20 atomes de carbone ; et M⁺ représente un ion de métal alcalin ou d'ammonium quaternaire.

21. Résine thermoplastique selon l'une quelconque des revendications 1 à 18, dans laquelle le polymère de vinyle (I) est susceptible d'être obtenu en faisant réagir un polymère de vinyle qui comprend un groupe hydroxyle à l'extrémité avec un composé représenté par la formule générale (4) :
XC(O)C(R)=CH₂ (4)
dans laquelle R représente un atome d'hydrogène, ou un groupe organique comprenant de 1 à 20 atomes de carbone ; et X représente un atome de chlore, de brome, ou un groupe hydroxyle.

22. Résine thermoplastique selon l'une quelconque des revendications 1 à 18, dans laquelle le polymère de vinyle (I) est susceptible d'être obtenu en faisant réagir un polymère de vinyle qui comprend un groupe hydroxyle à l'extrémité avec un composé de diisocyanate, et en faisant réagir le groupe isocyanate résiduel avec un composé représenté par la formule générale (5) :
HO-R'-OC(O)C(R)=CH₂ (5)
dans laquelle R représente un atome d'hydrogène, ou un groupe organique comprenant de 1 à 20 atomes de carbone ; et R' représente un groupe organique bivalent comprenant de 2 à 20 atomes de carbone.

23. Résine thermoplastique selon l'une quelconque des revendications 1 à 22, dans laquelle le polymère de vinyle (I) est un polymère linéaire.

24. Résine thermoplastique selon l'une quelconque des revendications 1 à 22, dans laquelle le polymère de vinyle (I) est un polymère ramifié.

25. Résine thermoplastique selon l'une quelconque des revendications 1 à 24, dans laquelle le monomère polymérisable par addition est un monomère polymérisable par polymérisation radicalaire.

26. Résine thermoplastique selon la revendication 25, dans laquelle le monomère polymérisable par polymérisation radicalaire comprend comme composant principal un monomère choisi dans le groupe constitué par les monomères (méth)acryliques, les monomères d'acrylonitrile, les monomères de vinyle aromatiques, les monomères d'ester de vinyle, les monomères de vinyle halogénés, les monomères de vinyle contenant du fluor et les monomères de vinyle contenant du silicium.

27. Résine thermoplastique selon la revendication 26, dans laquelle le monomère polymérisable par polymérisation radicalaire comprend du styrène et/ou de l'acrylonitrile comme composant principal.

28. Résine thermoplastique selon la revendication 26, dans laquelle le monomère polymérisable par polymérisation radicalaire comprend du chlorure de vinyle comme composant principal.

29. Résine thermoplastique selon la revendication 26, dans laquelle le monomère polymérisable par polymérisation radicalaire comprend un ester (méth)acrylique comme composant principal.

30. Résine thermoplastique selon l'une quelconque des revendications 1 à 24, dans laquelle le monomère polymérisable par addition est un monomère polymérisable par polymérisation anionique.

31. Résine thermoplastique selon la revendication 30, dans laquelle le monomère polymérisable par polymérisation anionique comprend comme composant principal au moins un monomère choisi dans le groupe constitué par les monomères (méth)acryliques, les monomères de vinyle aromatiques et les monomères de diène.

32. Résine thermoplastique selon la revendication 31, dans laquelle le monomère polymérisable par polymérisation anionique comprend du styrène comme composant principal.

33. Résine thermoplastique selon la revendication 31, dans laquelle le monomère polymérisable par polymérisation anionique comprend un ester (méth)acrylique comme composant principal.

34. Résine thermoplastique selon la revendication 31, dans laquelle le monomère polymérisable par polymérisation anionique comprend du butadiène et/ou de l'isoprène comme composant principal.

35. Résine thermoplastique selon l'une quelconque des revendications 25 à 29, dans laquelle la polymérisation par addition est une polymérisation radicalaire.

36. Résine thermoplastique selon la revendication 35, dans laquelle la polymérisation radicalaire est une polymérisation aqueuse.

37. Résine thermoplastique selon la revendication 36, dans laquelle la polymérisation aqueuse est une polymérisation en suspension.

38. Résine thermoplastique selon la revendication 36, dans laquelle la polymérisation aqueuse est une polymérisation en émulsion.

39. Résine thermoplastique selon la revendication 35, dans laquelle la polymérisation radicalaire est une polymérisation en solution.

40. Résine thermoplastique selon la revendication 35, dans laquelle la polymérisation radicalaire est une polymérisation en masse.

41. Résine thermoplastique selon la revendication 35, dans laquelle la polymérisation radicalaire est une polymérisation radicalaire vivante.

42. Résine thermoplastique selon la revendication 41, dans laquelle la polymérisation radicalaire vivante est une polymérisation radicalaire par transfert d'atomes.

43. Résine thermoplastique selon l'une quelconque des revendications 30 à 34, dans laquelle la polymérisation par addition est une polymérisation anionique.
